# EUROPÄISCHE PATENTSCHRIFT

(11) **EP 4 195 967 B1**
(45) Veröffentlichungstag und Bekanntmachung des Hinweises auf die Patenterteilung: **24.07.2024**
(21) Anmeldenummer: 21773012.6
(22) Anmeldetag: 01.09.2021
(51) Int. Cl.: A41D 13/11, A62B 23/02, B01D 46/00, B01D 39/08, B01D 39/16

(54) **ATEMSCHUTZMASKE MIT ANTIMIKROBIELLEM CHITOSAN**
RESPIRATORY PROTECTION MASK WITH ANTIMICROBIAL CHITOSAN
MASKE DE PROTECTION RESPIRATOIRE DOTÉE D'UN CHITOSAN ANTI-MICROBIEN

(30) Priorität: 04.11.2020 DE 102020006768; 29.03.2021 DE 102021107926
(43) Veröffentlichungstag der Anmeldung: 21.06.2023
(73) Patentinhaber: MSLsolutions GmbH, 46047 Oberhausen (DE)
(72) Erfinder: DAHMS, Gerd Herbert, 46047 Oberhausen (DE)
(74) Vertreter: Strehlke, Ingo Kurt
(86) Internationale Anmeldenummer: PCT/EP2021/074104
(87) Internationale Veröffentlichungsnummer: WO 2022/096175

(56) Entgegenhaltungen:
- WO-A2-2008/105934
- CN-A- 104 294 477
- CN-A- 109 610 164
- CN-A- 111 672 204
- CN-A- 111 876 906
- US-A1- 2007 044 801

## Beschreibung

Die vorliegende Erfindung betrifft das technische Gebiet von Atemschutzmasken welche insbesondere im Rahmen der Aufreinigung bzw. des Filterns von Luft, insbesondere Atemluft, eingesetzt werden können und welche diesbezügliche Filtereigenschaften aufweisen, und zwar auch im Hinblick auf eine Verringerung von beispielsweise in Aerosolen vorliegenden infektiösen Krankheitserregern, wie Keimen bzw. Viren, in der aufzureinigenden Luft bzw. Atemluft.

Vor diesem Hintergrund betrifft die vorliegende Erfindung insbesondere eine Atemschutzmaske, welche beispielsweise in Form einer Mund-Nasen-Schutzmaske (MNS) ausgebildet sein kann, wobei die Atemschutzmaske mindestens ein luftdurchlässiges textiles Flächengebilde aufweist, welches mit mindestens einem antimikrobiellen Biopolymer, nämlich mit mindestens einem Chitosan, ausgerüstet ist bzw. mindestens ein diesbezügliches Biopolymer aufweist.

Vorliegend beschrieben ist auch die Verwendung eines antimikrobiellen Biopolymers, bevorzugt Chitosan, zur Ausrüstung und/oder zum Erhalt einer Atemschutzmaske bzw. eines textilen Flächengebildes der Atemschutzmaske mit antimikrobiellen Eigenschaften.

Weiterhin ist vorliegend beschrieben auch ein insbesondere textiles Filterelement als solches, wobei das Filterelement mit mindestens einem antimikrobiellen Biopolymer, bevorzugt mit mindestens einem Chitosan, ausgerüstet ist bzw. ein diesbezügliches antimikrobielles Biopolymer aufweist.

In diesem Zusammenhang ist vorliegend beschrieben auch die Verwendung eines antimikrobiellen Biopolymers, insbesondere mindestens eines Chitosans, zur Ausrüstung und/oder zum Erhalt eines entsprechenden Filterelements mit antimikrobiellen Eigenschaften.

Weiterhin ist vorliegend beschrieben auch eine Zusammensetzung, insbesondere wässrige Zusammensetzung, welche vorzugsweise in Form einer Lösung oder Dispersion vorliegt und welche mindestens ein antimikrobielles Biopolymer, bevorzugt mindestens ein Chitosan, aufweist. In diesem Zusammenhang kann die Zusammensetzung beispielsweise zur Ausrüstung bzw. zum Erhalt einer Atemschutzmaske sowie eines Filterelements mit dem antimikrobiellen Biopolymer bzw. mit antimikrobiellen Eigenschaften verwendet bzw. eingesetzt werden.

Somit ist vorliegend beschrieben auch die Verwendung der Zusammensetzung nach der Erfindung zur Ausrüstung bzw. zum Erhalt einer Atemschutzmaske bzw. eines textilen Flächengebildes der Atemschutzmaske sowie eines Filterelements mit mindestens einem antimikrobiellen Biopolymer, bevorzugt mit mindestens einem Chitosan, bzw. mit antimikrobiellen Eigenschaften.

Insbesondere im Hinblick auf Atemwegserkrankungen bzw. -infekte werden zugrundeliegende Krankheitserreger, welche beispielsweise in Form von Viren bzw. Bakterien vorliegen, oftmals über die (Atem-)Luft verbreitet, so dass es über die Ausbreitung in der Luft zu einer Ansteckung weiterer Personen kommen kann, welche beispielsweise in einem relativ engen räumlichen Kontakt zu einer infektiösen Person stehen.

Dabei werden die Krankheitserreger oftmals in Form von insbesondere flüssigen Aerosolen verbreitet bzw. von einer infektiösen Person abgesondert, beispielsweise durch Niesen oder Husten bzw. durch bloßes Sprechen oder Atmen. Zudem können derartige Erreger auch über größere Speichel- bzw. Schleimtröpfchen von einer infektiösen Person abgesondert werden. Der Übergang zwischen Aerosolen und entsprechenden Tröpfchen ist dabei fließend. Während insbesondere größere Tröpfchen schneller zu Boden sinken, können Aerosole auch über längere Zeit in der Luft verbleiben und sich insbesondere in geschlossenen Räumen in zu einer Infektion führenden Konzentration verteilen.

Beim Atmen und Sprechen, vor allem bei höherer Lautstärke, werden insbesondere Aerosole gebildet und ausgeschieden, während beim Husten und Niesen zusätzlich und in einem höheren Maß größere Tröpfchen entstehen.

Bei einer entsprechenden Aerosolkonzentration und Kontaktdauer bzw. Kontaktintensität kann es dann zu einer Übertragung auf weitere Personen und zu einer Infektion kommen. In Abhängigkeit von der Infektiösität und in Abhängigkeit von den zugrundeliegenden Gegebenheiten können dabei mitunter auch hohe Infektionsraten resultieren, wie sie beispielsweise in der kalten Jahreszeit vorliegen, wobei sich in diesem Zusammenhang auch explosionsartige Ausbreitungen ergeben können, einhergehend mit einem örtlich und zeitlich stark gehäuften Auftreten von Infektionen bzw. hierdurch hervorgerufene Erkrankungen mit der Gefahr der Ausbildung einer Epidemie.

Zu den Erregern, welche zur Ausbildung entsprechender Atemwegserkrankungen führen können und welche im Allgemeinen über Aerosole bzw. Tröpfchen übertragen werden können, zählen beispielsweise Viren, wie grippeauslösende Influenzaviren sowie oftmals weniger problematische grippale Infekte bzw. Erkältungen auslösende Parainfluenzaviren und Rhinoviren. Zudem kann das neu aufgetretene Virus SARS-CoV-2 als hochpathogener Vertreter der Coronaviren genannt werden, welches zum einen hochinfektiös ist und zum anderen zu mitunter schweren Krankheitsverläufen unter Ausbildung der Atemwegs- bzw. Lungenerkrankung COVID-19 führen kann.

Insgesamt besteht ein hoher Bedarf an der Bereitstellung entsprechender Schutzmaßnahmen zur Verhinderung der Übertragung bzw. Infektion mit entsprechenden Erregern. Neben allgemeinen Infektionsschutzmaßnahmen, wie insbesondere die Einhaltung von Abständen, das Beachten von Hygiene, wie Händewaschen oder dergleichen, regelmäßiges Lüften von geschlossenen Räumen, kommt auch dem Tragen von Atemschutzmasken im Hinblick auf die Vermeidung von Infektionen und die Verringerung der Ausbreitung von Erkrankungen eine große Bedeutung zu.

Entsprechende Atemschutzmasken können beispielsweise als sogenannter "Mund-Nasen-Schutz" (MNS) ausgebildet sein. Ein derartiger Mund-Nasen-Schutz dient insbesondere der Entfernung bzw. Zurückhaltung bzw. der Absonderung infektiöser Krankheitserreger aus dem Mund/Rachen-Raum bzw. der Nase eines Trägers und somit sozusagen als mikrobiologische Barriere gegenüber von einem Träger ausgehenden bzw. abgegebenen und gegebenenfalls infektiösen Speichel- bzw. Schleimtröpfchen, wobei auch die Aerosolverteilung bzw. -austragung verringert werden kann.

Weiterhin kommen auch insbesondere als Halbmasken ausgebildete Atemschutzmasken mit verbesserten partikelfiltrierenden Eigenschaften vor, welche einen weiterführenden Schutz insbesondere auch gegenüber flüssigen Aerosolen bieten. Die Schutzklassen solcher Atemschutzmasken werden insbesondere anhand der Bezeichnung FFP1, FFP2 bzw. FFP3 beschrieben (mit FFP = Filtering Face Piece). Derartige Atemschutzmasken bieten insbesondere ab der Schutzklasse FFP2 ein verbessertes Rückhaltevermögen auch in Bezug auf sehr kleine Partikel.

Die WO 2008/105934 A2 betrifft ein Verfahren zur Inaktivierung eines Virus, wobei das Virus mit Chitosan oder einem Derivat hiervon in Kontakt gebracht werden soll, sowie ein Filter zum Entfernen eines oder mehrerer toxischer Mittel aus einem Luftvolumen, wobei das Filter Chitosan aufweist.

Die US 2007/044801 A1 betrifft eine Gesichtsmaske, welche einen Körperabschnitt umfasst, welcher derart konfiguriert ist, dass er über den Mund und mindestens einen Teil der Nase eines Trägers bzw. Benutzers positioniert wird, so dass Atemluft durch den Körperabschnitt geführt wird, wobei der Körperabschnitt eine äußere Schicht mit mindestens einem keimtötenden Mittel in einer wirksamen Menge umfasst.

Die CN 104 294 477 A betrifft ein Verfahren zur Herstellung eines Polysaccharid-Kompositfasermaterials auf Basis von Carboxymethylchitosan und Polyvinylalkohol; weiterhin ist auch eine Maske mit einem Maskenkörper beschrieben, wobei die innere Seite des Maskenkörpers mit einer Funktionsschicht aus dem Polysaccharid-Kompositfasermaterial ausgerüstet ist.

Weiterhin betrifft die CN 109 610 164 A ein Verfahren zur Herstellung eines Chitosanfaser-Gesichtsmaskenstoffs sowie ein Chitosanfaser-Gesichtsmaskenstoff als solchen. Bei der Herstellung des Gesichtsmaskenstoffs wird Bernsteinsäureanhydrid verwendet, wobei eine Reaktion mit dem Material des Gesichtsmaskenstoffs durchgeführt werden soll.

Die CN 111 672 204 A betrifft ein silberhaltiges Filterelement, wobei das Filterelement eine bakteriostatische Schicht mit einem Basisstoff und einem von dem Basisstoff getragenen silberbasierten Material aufweist, wobei das Material Silberionen bzw. Nanosilber aufweisen soll. Der Basisstoff kann auch mit Chitosan oder Seidenfibroin beladen sein.

Die CN 111 876 906 A betrifft einen Vliesstoff mit hoher Filterleistung und darüber hinaus ein entsprechendes Herstellungs- bzw. Verarbeitungsverfahren, wobei die Fasern des Vliesstoffs auf Chitosan und Polyethylenoxid basieren.

Die WO 2012/030798 A1 bzw. die zur derselben Patentfamilie gehörende EP 2 611 315 A1 betrifft eine Filtermaske mit Versteifungselementen, wobei die Filtermaske eine Ober- und Unterkante aufweist, die jeweils mit mindestens einer formbaren Versteifung versehen sind.

Weiterhin betrifft die DE 20 2011 107 529 U1 eine Atemschutzmaske zum Filtern von Luft, welche aus einem Maskenkörper und mindestens einem Halteband besteht, welches an der Atemschutzmaske befestigt ist. Der Maskenkörper soll an seinem Rand eine Luftauffangvorrichtung aufweisen, welche die vom Maskenträger ausgestoßene Luft auffängt und diese so aus dem Maskenkörper entweichen lässt, dass der Maskenkörperrand jederzeit bündig an dem Gesicht des Maskenträgers anliegt.

Herkömmliche Atemschutzmasken des Standes der Technik weisen mitunter den Nachteil auf, dass diese bereits nach kurzem Gebrauch mit Krankheitserregern, wie Bakterien oder Viren, übermäßig kontaminiert sein können, wobei die Erreger in der Atemschutzmaske insbesondere bei längerem Gebrauch akkumuliert bzw. angehäuft werden. Zudem kann insbesondere bei längerem Gebrauch, insbesondere einhergehend mit der Ansammlung von Feuchtigkeit (beispielsweise infolge einer Kondensatbildung der Feuchtigkeit aus der Atemluft) in der Atemschutzmaske bzw. ein das Bakterienwachstum begünstigendes Milieu vorliegen eine unerwünschte Kontamination bzw. Vermehrung von mitunter pathogenen bakteriellen Keimen in der Maske selbst erfolgen, was insgesamt die Anwendungssicherheit und Einsatzdauer von Atemschutzmasken begrenzt. Im Hinblick auf eine übermäßige Befeuchtung einer zugrundeliegenden Atemschutzmaske besteht auch häufig das Problem des Befalls mit mitunter pathogenen Pilzen bzw. Hefen, was gleichermaßen nachteilig ist.

Vor diesem Hintergrund kann es insbesondere der Fall sein, dass mit zunehmender Trage- bzw. Benutzungsdauer die Beladung bzw. Kontamination der Atemschutzmaske mit Krankheitserregern zunimmt, und zwar auch an den inneren und äußeren Oberflächen der Atemschutzmaske. In diesem Zusammenhang kann somit von einer derart belasteten bzw. kontaminierten Atemschutzmaske ein sekundäres Infektionsrisiko ausgehen, beispielsweise für den Fall, dass sich entsprechende Krankheitserreger bzw. Keime aus der Atemschutzmaske lösen und von einem Träger aufgenommen oder in die Umgebung ausgetragen werden.

In diesem Zusammenhang kann es z. B. auch zu einer Kontamination der Hände eines Trägers bei Berührung der Maske (beispielsweise beim Abnehmen) kommen, was die Gefahr einer (Sekundär)Infektion weiterführend erhöht.

Eine rasche bzw. übermäßige Akkumulation von Krankheitserregern in der Atemschutzmaske führt nicht zuletzt auch dazu, dass die Filterkapazität einer zugrundeliegenden Atemschutzmaske vorzeitig erschöpfen kann.

Atemschutzmasken weisen dabei oftmals textile Flächengebilde zur Filterung von Luft auf, welche dabei sozusagen als Sammelstelle für aus der Luft gebildete Keime fungiert. Insbesondere bei übermäßiger Beladung kann eine unerwünschte Freisetzung der Keime resultieren.

Vor diesem Hintergrund besteht somit im Stand der Technik ein großer Bedarf an der Bereitstellung entsprechender Atemschutzmasken mit verbesserten Schutz- und Handhabungseigenschaften. Gleichermaßen besteht im Stand der Technik ein großer Bedarf hinsichtlich der Bereitstellung technischer Lösungen zur weiterführenden Verbesserung von Atemschutzmasken auch unter dem Gesichtspunkt der Verlängerung von Einsatzzeiten und der Minimierung des von einer Maske selbst ausgehenden Infektionsrisikos.

In entsprechender Weise besteht darüber hinaus auch ein hoher Bedarf an der Bereitstellung von Filterelementen als solchen, wie sie beispielsweise in Filtervorrichtungen, wie Luftfilteranlagen bzw. -geräten, eingesetzt werden können, wobei die Filterelemente gleichermaßen verbesserte Eigenschaften hinsichtlich der bereitgestellten Schutz- bzw. Filterfunktion gegenüber pathogenen Keimen bzw. Krankheitserregern aufweisen sollen, einhergehend mit der Verhinderung einer übermäßigen Akkumulation bzw. (erneuten) Freisetzung von Krankheitserregern aus dem Filterelement.

Vor diesem Hintergrund besteht somit eine Aufgabe der vorliegenden Erfindung darin, gegenüber dem Stand der Technik verbesserte Atemschutzmasken bereitzustellen, welche insbesondere zur Verhinderung der Übertragung von über Aerosole bzw. Tropfen verbreiteten Krankheitserregern bzw. Keimen eingesetzt werden, wobei die erfindungsgemäß bereitgestellten Atemschutzmasken die zuvor geschilderten Nachteile des Standes der Technik weitgehend vermeiden oder aber wenigstens abschwächen sollen.

Insbesondere sollen solche Atemschutzmasken bereitgestellt werden, welche gegenüber herkömmlichen Atemschutzmasken eine verbesserte Schutzfunktion im Hinblick auf die Übertragung von Krankheitserregern aufweisen sollen, wobei zudem auch die Anwendungssicherheit bzw. die Handhabung der erfindungsgemäß bereitgestellten Atemschutzmasken verbessert sein soll.

Insbesondere ist eine weiterführende Aufgabe der vorliegenden Erfindung darin zu sehen, entsprechende Atemschutzmasken bereitzustellen, welche verbesserte Standzeiten bzw. eine verlängerte Einsatzdauer aufweisen, wobei gleichzeitig die Gefahr von (Sekundär-)Infektionen infolge von aus den Atemschutzmasken beim Gebrauch (erneut) freigesetzten Krankheitserregern verringert werden soll.

Eine nochmals weitere Aufgabe der vorliegenden Erfindung ist zudem darin zu sehen, ein entsprechendes Konzept zur Ausrüstung von Atemschutzmasken bzw. Filterelementen mit speziellen bzw. maßgeschneiderten Eigenschaften bereitzustellen, und zwar insbesondere was die Bereitstellung von verbesserten Filter- bzw. Schutzeigenschaften bzw. die Bereitstellung verbesserter Eigenschaften hinsichtlich einer Kontaminationsverringerung der Atemschutzmasken als solche mit Krankheitserregern oder dergleichen anbelangt.

Eine wiederum weitere Aufgabe der vorliegenden Erfindung liegt auch darin, entsprechende wirkstoffhaltige Zusammensetzungen bereitzustellen, welche sich insbesondere zur Ausrüstung von Atemschutzmasken bzw. Filterelementen mit speziellen bzw. maßgeschneiderten Eigenschaften, insbesondere wie zuvor angeführt, eignen, wobei die Zusammensetzungen als solche eine hohe (Lager-)Stabilität bei gleichermaßen guten Anwendungseigenschaften aufweisen.

Insbesondere soll eine Stabilisierung der diesbezüglich eingesetzten Wirkkomponenten gewährleistet werden.

In entsprechender Weise sollen im Rahmen der vorliegenden Erfindung auch Filterelemente als solche bereitgestellt werden, wie sie beispielsweise in Luftfiltervorrichtungen bzw. -geräten eingesetzt werden können und welche gleichermaßen über verbesserte Filter- und Anwendungseigenschaften verfügen.

Zur Lösung der zuvor geschilderten Aufgabe schlägt die vorliegende Erfindung - gemäß einem **ersten** Aspekt der vorliegenden Erfindung - eine Atemschutzmaske, insbesondere in Form einer vorzugsweise partikel- und/oder aerosolfiltrierenden Halbmaske bzw. eines vorzugsweise partikel- und/oder aerosolfiltrierenden Mund-Nasen-Schutzes (MNS), nach Anspruch 1 vor; weitere, insbesondere vorteilhafte Ausgestaltungen der erfindungsgemäßen Atemschutzmaske sind Gegenstand der diesbezüglichen Unteransprüche.

Vorliegend beschrieben ist auch die Verwendung eines antimikrobiellen Biopolymers, bevorzugt mindestens eines Chitosans, zur Ausrüstung bzw. zum Erhalt einer Atemschutzmaske mit antimikrobiellen Eigenschaften.

Vorliegend beschrieben ist auch ein Filterelement, insbesondere textiles Filterelement.

Vorliegend beschrieben ist auch die Verwendung mindestens eines antimikrobiellen Biopolymers, bevorzugt mindestens eines Chitosans, zur Ausrüstung bzw. zum Erhalt eines Filterelements mit antimikrobiellen Eigenschaften.

Vorliegend beschrieben ist auch eine Zusammensetzung, insbesondere wässrige Zusammensetzung, vorzugsweise in Form einer Lösung oder Dispersion, insbesondere zur Ausrüstung bzw. zum Erhalt einer Atemschutzmaske bzw. eines textilen Flächengebildes einer Atemschutzmaske bzw. zur Ausrüstung bzw. zum Erhalt eines Filterelements mit mindestens einem antimikrobiellen Biopolymer bzw. zur Ausrüstung mit antimikrobiellen Eigenschaften.

Vorliegend beschrieben ist auch die Verwendung der Zusammensetzung zur Ausrüstung bzw. zum Erhalt einer Atemschutzmaske, insbesondere eines textilen Flächengebildes bzw. -materials einer Atemschutzmaske, bzw. eines Filterelements mit mindestens einem mikrobiellen Biopolymer, vorzugsweise mit mindestens einem Chitosan.

Darüber hinaus betrifft die vorliegende Erfindung - gemäß einem **zweiten** Aspekt der vorliegenden Erfindung - auch das Verfahren zur Ausrüstung bzw. zum Erhalt einer Atemschutzmaske bzw. eines textilen Flächengebildes, insbesondere als Bestandteil oder in Form einer Atemschutzmaske, mit mindestens einem antimikrobiellen Biopolymer bzw. mit antimikrobiellen Eigenschaften gemäß dem diesbezüglichen und das Verfahren betreffenden unabhängigen Anspruch.

Vorliegend beschrieben ist zudem die Verwendung mindestens eines antimikrobiellen Biopolymers, vorzugsweise mindestens eines Chitosans, zur Ausrüstung bzw. zum Erhalt von Textilmaterialien, Textilien und/oder textilen Erzeugnissen mit antimikrobiellen Eigenschaften bzw. zum Imprägnieren bzw. zur Ausrüstung bzw. zum Erhalt derartiger Materialien mit feuchtigkeits- und/oder schmutzabweisenden Eigenschaften bzw. zur Bereitstellung eines Lotuseffekts bei derartigen Materialien sowie zur Glättung und/oder Verringerung der Rauheit, insbesondere Oberflächenrauheit, bzw. zur Verbesserung der haptischen Eigenschaften derartiger Materialien.

Vorliegend beschrieben ist zudem die Verwendung mindestens eines antimikrobiellen Biopolymers, vorzugsweise mindestens eines Chitosans, in Lebensmittelzusammensetzungen, kosmetischen Zusammensetzungen oder pharmazeutischen Zusammensetzungen bzw. in den diesbezüglichen Bereichen.

Schließlich ist vorliegend beschrieben auch ein weiteres Verfahren zur Herstellung einer insbesondere homogen ausgebildeten Zusammensetzung unter Inkorporierung einer ölbasierten Komponente.

Es versteht sich im Zusammenhang mit den nachfolgenden Ausführungen von selbst, dass Ausgestaltungen, Ausführungsformen, Vorteile und dergleichen, welche nachfolgend zu Zwecken der Vermeidung von Wiederholungen nur zu einem Aspekt angeführt sind, selbstverständlich auch in Bezug auf die übrigen Aspekt entsprechend gelten, ohne dass dies einer gesonderten Erwähnung bedarf.

Bei allen nachstehend genannten relativen bzw. prozentualen gewichtsbezogenen Angaben, insbesondere Mengenangaben, ist weiterhin zu beachten, dass diese im Rahmen der vorliegenden Erfindung vom Fachmann derart auszuwählen sind, dass sie sich in der Summe unter Einbezug sämtlicher Komponenten bzw. Inhaltsstoffe, insbesondere wie nachfolgend definiert, stets zu 100 % bzw. 100 Gew.-% ergänzen bzw. addieren; dies versteht sich für den Fachmann aber von selbst.

Weiterhin gilt, dass der Fachmann - anwendungsbezogen oder einzelfallbedingt - von den nachfolgend angeführten Konzentrations-, Gewichts-, Mengen- und Bereichsangaben abweichen kann, ohne dass er den Rahmen der vorliegenden Erfindung verlässt.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit eine Atemschutzmaske in Form einer vorzugsweise partikel- und/oder aerosolfiltrierenden Halbmaske und/oder eines vorzugsweise partikel- und/oder aerosolfiltrierenden Mund-Nasen-Schutzes (MNS), insbesondere Atemschutzmaske zur Verringerung der Absonderung infektiöser Krankheitserreger aus Mund-, Rachen- und Nasenraum oder chirurgische Gesichtsmaske mit mikrobiologischer Barriere, insbesondere zur Verwendung als insbesondere aerosolfiltrierende Atemschutzmaske und/oder Filterpartikelmaske, vorzugsweise zur Verhinderung der Übertragung von Krankheitserregern durch Tröpfcheninfektion oder vorzugsweise zur Verringerung der Keim- und Viruslast, insbesondere bei epidemischer oder pandemischer Ausbreitung von Infektionskrankheiten, wie COVID-19,
wobei die Atemschutzmaske mindestens ein luftdurchlässiges, insbesondere atem(luft)durchlässiges, textiles Flächengebilde (textiles Flächenmaterial) aufweist,
wobei das textile Flächengebilde mit mindestens einem antimikrobiellen Biopolymer, ausgewählt aus Chitosan und/oder dessen Derivat oder Salz, ausgerüstet ist, wobei das antimikrobielle Biopolymer ein gewichtsmittleres Molekulargewicht M_{w} im Bereich von 1.500 Da bis 9.499 Da aufweist und wobei das antimikrobielle Biopolymer einen Acetylierungsgrad von mindestens 5 %, bezogen auf die acetylierbaren funktionellen Gruppen des Biopolymers, aufweist,
wobei das antimikrobielle Biopolymer auf das textile Flächengebilde aufgebracht und/oder aufgetragen ist,
wobei das textile Flächengebilde das antimikrobielle Biopolymer in einer Menge im Bereich von 0,001 Gew.-% bis 20 Gew.-%, bezogen auf das textile Flächengebilde, enthält und/oder wobei das textile Flächengebilde das antimikrobielle Biopolymer in einer Menge im Bereich von 0,1 g/m² bis 200 g/m², bezogen auf das textile Flächengebilde, enthält, und
wobei das textile Flächengebilde mindestens ein Additiv aufweist und/oder hiermit ausgerüstet ist, wobei das Additiv ausgewählt ist aus der Gruppe von Mandelsäure, Salicylsäure, Ascorbinsäure und Milchsäure.

Mit anderen Worten verhält es sich erfindungsgemäß insbesondere derart, dass das luftdurchlässige, insbesondere atem(luft)durchlässige, textile Flächengebilde der Atemschutzmaske nach der Erfindung mindestens ein antimikrobielles Biopolymer, insbesondere antimikrobielles Biopolymer mit Proteinaffinität in Form von Chitosan und/oder dessen Derivat und/oder Salz, bevorzugt Chitosan, aufweist.

Dementsprechend weist die erfindungsgemäße Atemschutzmaske bzw. das textile Flächengebilde der Atemschutzmaske nach der Erfindung antimikrobielle Eigenschaften auf.

Der Begriff "Biopolymer", wie er im Rahmen der vorliegenden Erfindung verwendet wird, ist dabei sehr breit zu verstehen. Insbesondere bezieht sich der Begriff auf solche Polymere, welche natürlichen Ursprungs sind bzw. ihren Ursprung im Stoffwechsel von Lebewesen finden bzw. von Lebewesen produziert werden. Der Begriff bezieht sich dabei insbesondere auch auf solche Biopolymere, welche ausgehend von ursprünglichen Polymeren nachträglich insbesondere chemisch modifiziert sind, wie es für das erfindungsgemäß in bevorzugter Weise eingesetzte Chitosan der Fall sein kann.

Der Begriff "antimikrobiell" (z.B. "antimikrobielles Biopolymer", "antimikrobielle Eigenschaften"), wie er im Rahmen der vorliegenden Erfindung verwendet wird, ist gleichermaßen sehr breit zu verstehen. Insbesondere bezieht sich der in Rede stehende Begriff auf wachstumshemmende, neutralisierende, inaktivierende, unschädlichmachende, abtötende und/oder die Infektiösität und/oder die Pathogenität von Krankheitserregern bzw. Keimen verringernde Eigenschaften, und zwar insbesondere in Bezug auf Mikroorganismen, wie Bakterien, Viren, Pilze, Algen, Hefen oder dergleichen. Im Allgemeinen handelt es sich bei den diesbezüglichen Mikroorganismen insbesondere um pathogene bzw. infektiöse Krankheitserreger bzw. Keime. Insbesondere umfasst der in Rede stehende Begriff in entsprechender Weise auch biostatische bzw. biozide Eigenschaften in Bezug auf die zugrundeliegenden Mikroorganismen.

Die Anmelderin hat in diesem Zusammenhang in völlig überraschender Weise herausgefunden, dass die vorliegend angeführten Biopolymere in ziel- und zweckgerichteter Weise im Hinblick auf eine Atemschutzmaske bzw. ein Filterelement eingesetzt werden können, wobei auf diese Weise die Atemschutzmaske bzw. das vorliegend beschriebene Filterelement ziel- und zweckgerichtet mit antimikrobiellen Eigenschaften ausgerüstet werden kann, wobei in diesem Zusammenhang erfindungsgemäß in bevorzugter Weise Chitosan als antimikrobielles Biopolymer eingesetzt wird.

Im Rahmen der vorliegenden Erfindung können somit Atemschutzmasken mit antimikrobiellen Eigenschaften bereitgestellt werden, wobei eine übermäßige Kontamination der Atemschutzmaske selbst bzw. des diesbezüglich eingesetzten textilen Flächengebildes mit pathogenen Keimen, wie Bakterien, Viren, Pilze oder dergleichen, verringert bzw. verhindert wird.

Dies führt zu verbesserten Schutzeigenschaften der Atemschutzmaske, da die Gefahr einer von der Atemschutzmaske ausgehenden (Sekundär-)Infektion aufgrund der geringeren Keimbelastung in der Maske selbst verringert ist, so dass auch die Gefahr einer erneuten Freisetzung bzw. eines Loslösens von Keinem aus der Maske herabgesetzt ist. Gleichermaßen resultieren auch verbesserte Anwendungs- bzw. Handhabungseigenschaften mit der Bereitstellung einer höheren Anwendungssicherheit, da beispielsweise eine Kontamination bzw. Infektion über die Hände beim Anfassen (z. B. An- und Ablegen der Atemschutzmaske) gleichermaßen verringert wird. Zudem sind die Einsatz- bzw. Standzeiten der erfindungsgemäßen Atemschutzmasken erhöht, da aufgrund der antimikrobiellen Eigenschaften das der Maske zugrundeliegende textile Flächengebilde, welches als Filtermaterial fungiert, weniger schnell erschöpft und somit insgesamt eine höhere Filterkapazität aufweist. Mit anderen Worten weist die erfindungsgemäße Atemschutzmaske somit sozusagen selbstdekontaminierende bzw. selbstdesinfizierende Eigenschaften auf.

Was das im Rahmen der vorliegenden Erfindung in bevorzugter Weise als antimikrobielles Biopolymer eingesetzte Chitosan anbelangt, so handelt es sich hierbei insbesondere um eine naturbasierte Substanz, welche nicht toxisch und zudem biologisch abbaubar ist, was gleichermaßen der Anwendungssicherheit und der Entsorgung der beispielsweise als Einwegware ausgebildeten Atemschutzmaske nach der Erfindung insgesamt zuträglich ist. Darüber hinaus ist Chitosan im Allgemeinen nicht allergen.

Im Rahmen der erfindungsgemäßen Konzeption ist es zudem gelungen, die Herstellung der Atemschutzmasken nach der Erfindung zu vereinfachen, zumal die fertige Atemschutzmaske als solche bzw. das diesbezüglich eingesetzte fertige textile Flächengebilde als solches einerseits nachträglich mit dem Biopolymer ausgerüstet werden kann. Gleichermaßen kann das Biopolymer auch bereits bei der jeweiligen Herstellung der Maske eingesetzt werden, beispielsweise im Hinblick auf die zugrundeliegenden Fasern bzw. Fäden bzw. Garne.

In diesem Zusammenhang hat die Anmelderin zudem eine spezielle Zusammensetzung entwickelt, wie sie nachfolgend noch im Detail beschrieben ist, auf deren Basis eine dauerhafte und gleichmäßige Ausrüstung der Atemschutzmaske bzw. des der Atemschutzmaske zugrundeliegenden textilen Flächengebildes mit dem antimikrobiellen Biopolymer erfolgen kann.

Wie nachfolgend noch im Detail ausgeführt, wird im Rahmen der Ausrüstung der erfindungsgemäßen Atemschutzmaske bzw. des vorliegend beschriebenen Filterelements insbesondere derart vorgegangen, dass hierzu eine vorzugsweise wässrige Zusammensetzung, nämlich insbesondere wie nachfolgend beschrieben, eingesetzt wird, welche insbesondere Chitosan als antimikrobielles Biopolymer aufweist. In diesem Zusammenhang ist es im Rahmen der vorliegenden Erfindung gleichermaßen völlig überraschend gelungen, die allgemeinen Nachteile von Chitosan im Hinblick auf eine gewisse verringerte Löslichkeit in Wasser zu überkommen. Unter Verwendung der vorliegend bereitgestellten Zusammensetzung kann somit eine effiziente und dauerhafte Ausrüstung der erfindungsgemäßen Atemschutzmaske bzw. des vorliegend beschriebenen Filterelements mit dem antimikrobiellen Biopolymer erfolgen.

Was das erfindungsgemäß in bevorzugter Weise als antimikrobielles Biopolymer eingesetzte Chitosan (synonym auch als Poliglusam, Poly-D-Glucosamin oder Polyglucosamin bezeichnet) zudem anbelangt, so handelt es sich hierbei insbesondere um ein naturbasiertes Biopolymer bzw. um ein Biopolymer natürlichen Ursprungs, und zwar in Form eines Polyaminosaccharids. Im Allgemeinen kann Chitosan von Chitin abgeleitet werden, wobei Chitin β-1,4-glycosidisch verknüpfte N-Acetylglucosaminreste, insbesondere 2-Acetamido-2-deoxy-β-D-glucopyranose-Reste aufweist bzw. hieraus besteht. Zur Herstellung von Chitosan wird Chitin zumindest teilweise deacetyliert, so dass das resultierende Chitosan-Molekül 2-Amino-2-desoxy-β-D-glucopyranose-Einheiten bzw. Glucosamin-Einheiten aufweist. In diesem Zusammenhang kann die Deacetylierung von Chitin zur Ausbildung von Chitosan erheblich variieren, wobei die Deacetylierung nämlich vollständig oder teilweise erfolgen kann. Hierbei kann beispielsweise eine Verteilung stark deacetylierter Bereiche und wenig deacetylierter Bereiche oder eine homogene Deacetylierungsverteilung im Molekül resultieren. Der Grad der Acetylierung bestimmt dabei neben der Kettenlänge und der Konformation die physikalischen und chemischen Eigenschaften des resultierenden Chitosanmoleküls. Im Allgemeinen ist der Übergang vom Chitin zum Chitosan, welches weniger Acetylgruppen als Chitin aufweist, fließend. Für weitergehende Einzelheiten zu Chitosan bzw. Chitin kann zudem verwiesen werden auf RÖMPP Chemielexikon, 10. Auflage, Band 1, 1996, Georg Thieme Verlag, Stuttgart/New York, Seite 704, Stichwort: "Chitin", mit den dortigen Ausführungen zu Chitosan sowie auf die dort referierte Literatur, wobei der gesamte Offenbarungsgehalt der vorgenannten Literatur hiermit durch Bezugnahme vollumfänglich eingeschlossen ist.

Das erfindungsgemäß eingesetzte antimikrobielle Biopolymer weist zudem eine gewisse Proteinaffinität auf, was insbesondere bedeutet, dass - ohne sich auf diese Theorie beschränken oder berufen zu wollen - eine hohe Wechselwirkung bzw. Bindungsaffinität des antimikrobiellen Biopolymers mit Proteinen bzw. proteinbasierten Strukturen der zurückzuhaltenden Krankheitserreger gewährleistet ist. Hierdurch können die in Rede stehenden Krankheitserreger sozusagen weiterführend in der Atemschutzmaske bzw. dem textilen Flächengebilde gebunden bzw. zurückgehalten und letztendlich unschädlich gemacht werden. Hierdurch werden die Schutzeigenschaften der erfindungsgemäßen Atemschutzmaske weiterführend verbessert. Insbesondere wird auf Basis der erfindungsgemäßen Kombination sozusagen in Ergänzung zu den vorrangig physikalisch bedingten Filtereigenschaften des textilen Flächengebildes der Atemschutzmaske eine weitere Filterfunktion bereitgestellt, nämlich auf Basis der gezielten Wechselwirkung zwischen antimikrobiellem Biopolymer mit Proteinaffinität einerseits und den zurückzuhaltenden Keimen bzw. Krankheitserregern andererseits, wobei sich die diesbezüglichen Eigenschaften der erfindungsgemäßen Atemschutzmaske ergänzen und synergistisch zusammenwirken. In diesem Zusammenhang führt die Verwendung des antimikrobiellen Biopolymers mit Proteinaffinität zu einer weiterführenden und sozusagen universellen Schutzfunktion bzw. -wirkung gegenüber einer großen Vielzahl an unterschiedlichen Keimen bzw. Krankheitserregern, wie Bakterien, Viren, Pilzen, Hefen oder dergleichen, zumal die zugrundeliegenden Krankheitserreger im Allgemeinen an ihrer Außenseite bzw. Oberfläche Proteinstrukturen aufweisen, mit welchen das antimikrobielle Biopolymer zu interagieren imstande ist. Infolge der antimikrobiellen Eigenschaften des erfindungsgemäß eingesetzten Biopolymers kann eine effektive Unschädlichmachung bzw. Neutralisierung von Krankheitserregern in der Maske selbst erfolgen, was die Einsatz- bzw. Standzeit erhöht und die Gefahr von Sekundärinfektionen verringert, wie zuvor angeführt.

Zudem handelt es sich bei Chitosan um einen naturbasierten Stoff, der gegenüber Menschen nicht toxisch ist.

Im Rahmen der vorliegenden Erfindung kann die Atemschutzmaske bzw. das diesbezügliche textile Flächengebilde das antimikrobielle Biopolymer dabei in weiten Mengenbereichen aufweisen.
- So kann es sich insbesondere in Bezug auf die gewichtsbezogene Menge derart verhalten, dass das textile Flächengebilde das antimikrobielle Biopolymer in einer Menge von mindestens 0,001 Gew.-%, insbesondere mindestens 0,005 Gew.-%, vorzugsweise mindestens 0,01 Gew.-%, bevorzugt mindestens 0,05 Gew.-%, besonders bevorzugt mindestens 0,1 Gew.-%, bezogen auf das textile Flächengebilde, enthält.
- In diesem Zusammenhang kann das textile Flächengebilde das antimikrobielle Biopolymer in einer Menge von höchstens 20 Gew.-%, insbesondere höchstens 15 Gew.-%, vorzugsweise höchstens 10 Gew.-%, bevorzugt höchstens 5 Gew.-%, besonders bevorzugt höchstens 3 Gew.-%, bezogen auf das textile Flächengebilde, enthalten.
- Insbesondere kann das textile Flächengebilde das antimikrobielle Biopolymer in einer Menge im Bereich von 0,001 Gew.-% bis 20 Gew.-%, insbesondere im Bereich von 0,005 Gew.-% bis 15 Gew.-%, vorzugsweise im Bereich von 0,01 Gew.-% bis 10 Gew.-%, bevorzugt im Bereich von 0,05 Gew.-% bis 5 Gew.-%, besonders bevorzugt im Bereich von 0,1 Gew.-% bis 3 Gew.-%, bezogen auf das textile Flächengebilde, enthalten.

Im Rahmen der vorliegenden Erfindung kann auch die flächenbezogene Menge an antimikrobiellem Biopolymer in weiten Bereichen variieren:
- Besonders gute Ergebnisse werden dabei erhalten, wenn das textile Flächengebilde das antimikrobielle Biopolymer in einer Menge von mindestens 0,1 g/m², insbesondere mindestens 0,2 g/m², vorzugsweise mindestens 0,5 g/m², bevorzugt mindestens 0,75 g/m², besonders bevorzugt mindestens 1 g/m², bezogen auf das textile Flächengebilde, enthält.
- In diesem Zusammenhang kann das textile Flächengebilde das antimikrobielle in einer Menge von höchstens 200 g/m², insbesondere höchstens 100 g/m², vorzugsweise höchstens 50 g/m², bevorzugt höchstens 10 g/m², besonders bevorzugt höchstens 5 g/m², bezogen auf das textile Flächengebilde, enthalten.
- In diesem Zusammenhang ist es erfindungsgemäß insbesondere vorgesehen, dass das textile Flächengebilde das antimikrobielle Biopolymer in einer Menge im Bereich von 0,1 g/m² bis 200 g/m², insbesondere im Bereich von 0,2 g/m²bis 100 g/m², vorzugsweise im Bereich von 0,5 g/m² bis 50 g/m², bevorzugt im Bereich von 0,75 g/m² bis 10 g/m², besonders bevorzugt im Bereich von 1 g/m² bis 5 g/m², bezogen auf das textile Flächengebilde, enthält.

Insbesondere im Hinblick auf die antimikrobielle Wirksamkeit des antimikrobiellen Biopolymers hat es sich im Rahmen der vorliegenden Erfindung als vorteilhaft erwiesen, wenn das antimikrobielle Biopolymer ein definiertes Molekulargewicht (Molmasse) aufweist. Insbesondere werden auf Basis der zuvor definierten Molmassen besonders hohe antimikrobielle Wirksamkeiten bzw. eine hohe Bioverfügbarkeit des antimikrobiellen Biopolymers in Bezug auf die Atemschutzmaske bzw. das textile Flächengebilde der Atemschutzmaske nach der Erfindung bzw. eine hohe Stabilität und Homogenität der Ausrüstung gewährleistet.

Was die Bestimmung des Molekulargewichts des erfindungsgemäß eingesetzten antimikrobiellen Biopolymers anbelangt, so kann das Molekulargewicht, insbesondere das gewichtsmittlere Molekulargewicht M_{w} bzw. das zahlenmittlere Molekulargewicht Mₙ bzw. der Polydispersitätsindex (PDI) insbesondere mittels Gelpermeationschromatographie (GPC) bzw. Größenausschlusschromatographie (SEC, Size Exclusion Chromatography) bzw. bevorzugt auf Grundlage der DIN 55672-3:2016-03 bestimmt werden.

Wie zuvor angeführt, hat die Anmelderin in überraschender Weise gefunden, dass die Verwendung eines speziellen antimikrobiellen Biopolymers mit einem relativ kleinen Molekulargewicht, wie zuvor angeführt, zu verbesserten Eigenschaften hinsichtlich der antimikrobiellen Ausrüstung bzw. antimikrobiellen Eigenschaften der Atemschutzmaske führt, so dass die Verwendung eines antimikrobiellen Biopolymers mit relativ geringem Molekulargewicht gegenüber der Verwendung eines antimikrobiellen Biopolymers mit einem relativ großen Molekulargewicht, insbesondere wie gleichermaßen zuvor definiert, erfindungsgemäß grundsätzlich bevorzugt ist.

Erfindungsgemäß kann es zudem vorgesehen sein, dass das antimikrobielle Biopolymer acetylierte funktionelle Gruppen, insbesondere acetylierte Aminogruppen, aufweist. Hierdurch können die Moleküleigenschaften weiterführend eingestellt bzw. maßgeschneidert werden, und zwar insbesondere auch im Hinblick auf die Interaktionseigenschaften gegenüber dem Additiv, die Löslichkeits- bzw. Dispersionseigenschaften in dem Trägermedium und/oder die weiterführende Ausbildung antimikrobieller Eigenschaften. Dabei führen, ohne sich auf diese Theorie beschränken oder berufen zu wollen, eher geringere Acetylierungsgrade tendenziell zu einer höheren Löslichkeit bzw. Dispergierfähigkeit des Moleküls als solches und eher größere Acetylierungsgrade tendenziell zu einer erhöhten antimikrobiellen Wirksamkeit (insbesondere durch eine erhöhte Interaktioonsfähigkeit mit zu neutralisierenden Keimen) und/oder zu einer höheren Wechselwirkung bzw. Interaktion mit dem Additiv (was wiederum die Einarbeitbarkeit in das Trägermedium verbessern kann). Insbesondere vor dem Hintergrund dieses überraschend gefundenen Zusammenhangs können insbesondere die nachfolgenden Acetylierungsgrade für das Chitosan ausgewählt werden:

Erfindungsgemäß ist es dabei vorgesehen, dass das antimikrobielle Biopolymer einen Acetylierungsgrad von mindestens 5 %, bezogen auf die acetylierbaren funktionellen Gruppen, insbesondere Aminogruppen, des Biopolymers aufweist. Insbesondere kann das antimikrobielle Biopolymer insbesondere einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers, aufweisen.

Folglich kann es erfindungsgemäß vorgesehen sein, dass das antimikrobielle Biopolymer insbesondere einen Acetylierungsgrad im Bereich von 5 % bis 15 %, bezogen auf die acetylierbaren funktionellen Gruppen, insbesondere Aminogruppen, des Biopolymers aufweist.

Folglich kann es erfindungsgemäß vorgesehen sein, dass 5 % bis 15 % der acetylierbaren funktionellen Gruppen, insbesondere Aminogruppen, des Biopolymers, acetyliert sind.

Das erfindungsgemäß eingesetzte antimikrobielle Biopolymer mit welchem die Atemschutzmaske bzw. das textile Flächengebilde der Atemschutzmaske ausgerüstet ist, zeichnet sich insbesondere durch die nachfolgend beschriebenen antimikrobiellen Eigenschaften aus:
Insbesondere weist das antimikrobielle Biopolymer eine Eigenschaft, ausgewählt aus der Gruppe von (i) antiviralen Eigenschaften, insbesondere viruziden und virustatischen Eigenschaften; (ii) antibakteriellen Eigenschaften, insbesondere bakteriziden und bakteriostatischen Eigenschaften; (iii) antimykotischen (antifungalen) Eigenschaften, insbesondere fungistatischen und fungiziden Eigenschaften; (iv) antialgischen Eigenschaften, insbesondere algistatischen und algiziden Eigenschaften; und (v) deren Kombinationen, auf.

Zudem kann das antimikrobielle Biopolymer insbesondere eine Eigenschaft, ausgewählt aus der Gruppe von (i) antiviralen Eigenschaften, insbesondere viruziden und virustatischen Eigenschaften; und (ii) antibakteriellen Eigenschaften, insbesondere bakteriziden und bakteriostatischen Eigenschaften; und deren Kombinationen, aufweisen.

Mit anderen Worten kann es erfindungsgemäß vorgesehen sein, dass das antimikrobielle Biopolymer in bevorzugter Weise antivirale Eigenschaften, insbesondere viruzide und/oder virustatische Eigenschaften und/oder antibakterielle Eigenschaften, insbesondere bakterizide und/oder bakteriostatische, Eigenschaften auf. Zudem kann das antimikrobielle Biopolymer antimykotische und/oder antialgische (d. h. gegen Algen gerichtete) Eigenschaften aufweist, wie zuvor definiert.

Erfindungsgemäß verhält es sich in bevorzugter Weise derart, dass das antimikrobielle Biopolymer antivirale Eigenschaften, insbesondere viruzide und/oder virustatische Eigenschaften, aufweist, insbesondere gegen Viren aus der Gruppe von Coronaviren, Rhinoviren, Influenzaviren, Parainfluenzaviren, Respiratory-Syncytial-Viren und Adenoviren oder deren Kombinationen, vorzugsweise Coronaviren, bevorzugt SARS-CoV-2.

Auf dieser Basis kann somit die Schutzfunktion der erfindungsgemäßen Atemschutzmaske insbesondere auch gegenüber speziellen Viren erhöht sein, was auch mit einer verlängerten Einsatzdauer bzw. Standzeit und einer Verringerung der Gefahr in Bezug auf (Sekundär-)Infektionen einhergeht.

Durch die Verwendung eines speziellen antimikrobiellen Biopolymers verhält es sich im Rahmen der vorliegenden Erfindung somit gleichermaßen insbesondere derart, dass die Atemschutzmaske nach der Erfindung bzw. das textile Flächengebilde antimikrobielle Eigenschaften aufweist. Diesbezüglich kann die Atemschutzmaske nach der Erfindung und/oder das textile Flächengebilde eine antimikrobielle Eigenschaft, ausgewählt aus der Gruppe von (i) antiviralen Eigenschaften, insbesondere viruziden und virustatischen Eigenschaften; (ii) antibakteriellen Eigenschaften, insbesondere bakteriziden und bakteriostatischen Eigenschaften; (iii) antimykotischen (antifungalen) Eigenschaften, insbesondere fungistatischen und fungiziden Eigenschaften; (iv) antialgischen Eigenschaften, insbesondere algistatischen und algiziden Eigenschaften; und (v) deren Kombinationen, aufweisen. Insbesondere kann die Atemschutzmaske und/oder das textile Flächengebilde eine Eigenschaft, ausgewählt aus der Gruppe von (i) antiviralen Eigenschaften, insbesondere viruziden und virustatischen Eigenschaften; und (ii) antibakteriellen Eigenschaften, insbesondere bakteriziden und bakteriostatischen Eigenschaften; und deren Kombinationen, aufweisen. Insbesondere kann die Atemschutzmaske und/oder das textile Flächengebilde antivirale Eigenschaften, insbesondere viruzide und/oder virustatische Eigenschaften, aufweisen, insbesondere gegen Viren aus der Gruppe von Coronaviren, Rhinoviren, Influenzaviren, Parainfluenzaviren, Respiratory-Syncytial-Viren und Adenoviren oder deren Kombinationen, vorzugsweise Coronaviren, bevorzugt SARS-CoV-2.

Erfindungsgemäß kann es sich weiterhin derart verhalten, dass die Atemschutzmaske nach der Erfindung bzw. das textile Flächenmaterial der Atemschutzmaske, insbesondere das textile Flächenmaterial, bakterienhemmend bzw. virenhemmend bzw. pilzhemmend bzw. algenhemmend, insbesondere bakterienhemmend bzw. virenhemmend, vorzugsweise virenhemmend, ausgebildet ist. Insbesondere verhält es sich erfindungsgemäß derart, dass die Atemschutzmaske bzw. das textile Flächenmaterial, insbesondere das textile Flächenmaterial, mit einer bakterienhemmenden bzw. virenhemmenden bzw. pilzhemmenden bzw. algenhemmenden Ausrüstung, insbesondere mit einer bakterienhemmenden bzw. virenhemmenden Ausrüstung, vorzugsweise mit einer virenhemmenden Ausrüstung, versehen ist, insbesondere auf Basis des antimikrobiellen Biopolymers.

Im Allgemeinen kann die Atemschutzmaske das antimikrobielle Biopolymer in fester Form aufweisen. Auch hierdurch resultiert eine gewisse Dauerhaftigkeit und Beständigkeit der diesbezüglichen Ausrüstung.

Im Allgemeinen kann es im Rahmen der vorliegenden Erfindung auch vorgesehen sein, dass die Atemschutzmaske bzw. das textile Flächengebilde, insbesondere das textile Flächengebilde, ein Gewebe, Gewirke, Gestricke, Gesticke, Gelege oder ein Textilverbundstoff, insbesondere ein Vlies oder Gewebe, ist bzw. umfasst.

Zudem kann die Atemschutzmaske bzw. das textile Flächengebilde, insbesondere das textile Flächengebilde, flächig ausgebildet sein.

In diesem Zusammenhang kann die Atemschutzmaske bzw. das textile Flächengebilde, insbesondere das textile Flächengebilde, ein Flächengewicht im Bereich von 10 g/m² bis 1.000 g/m², insbesondere im Bereich von 20 g/m² bis 750 g/m², vorzugsweise im Bereich von 30 g/m² bis 600 g/m², bevorzugt im Bereich von 50 g/m² bis 500 g/m², aufweisen.

Darüber hinaus kann es erfindungsgemäß grundsätzlich auch vorgesehen sein, dass insbesondere das Flächenmaterial der Atemschutzmaske als insbesondere offenporiger Schaumstoff ausgebildet ist bzw. dass die Atemschutzmaske bzw. das diesbezügliche Flächenmaterial einen insbesondere offenporigen Schaumstoff umfasst. Der insbesondere offenporige Schaumstoff kann dabei beispielsweise aus Polyurethan oder dergleichen gebildet sein.

Die Ausbildung der Atemschutzmaske bzw. des textilen Flächengebildes auf Basis der obigen Angaben führt insbesondere zu guten Filtereigenschaften, insbesondere guten physikalischen Filtereigenschaften, hinsichtlich der zu entfernenden Krankheitserreger bzw. Keimen.

Erfindungsgemäß ist es aber insbesondere bevorzugt, dass die Atemschutzmaske bzw. das textile Flächengebilde aus textilen Fasern und/oder textilen Garnen (synonym auch als textile Fäden bezeichnet) besteht bzw. textile Fasern und/oder textile Garne aufweist.

Erfindungsgemäß kann es vorgesehen sein, dass die textilen Fasern bzw. die textilen Garne ausgewählt sind aus der Gruppe von (i) Naturfasern und/oder Naturgarnen, insbesondere Wolle und Baumwolle; (ii) synthetischen Fasern (Chemiefasern) und/oder synthetischen Garnen, insbesondere cellulosebasierten Fasern und/oder cellulosebasierten Garnen, vorzugsweise Viskosefasern und/oder Viskosegarnen; (iii) Fasern und/oder Garnen, enthaltend ein Material oder bestehend aus einem Material aus der Gruppe von Polyestern (PES), Polyolefinen, wie Polyethylen (PE) und Polypropylen (PP), Polyvinylchlorid (CLF), Polyvinylidenchlorid (CLF), Acetat (CA), Triacetat (CTA), Polyacryl (PAN), Polyamid (PA), Polyvinylalkohol (PVAL), Polyurethanen, Polyvinylestern, (Meth-)Acrylaten sowie deren Mischungen und Kombinationen; und (iv) Mischungen sowie Kombinationen der unter (i) bis (iii) angeführten Fasern und/oder Garne. Die vorgenannten Fasern bzw. Garne können gleichermaßen als Mischfasern bzw. Mischgarne auf Basis der vorgenannten Komponenten ausgebildet sein.

Erfindungsgemäß hat es sich dabei als vorteilhaft erwiesen, wenn die textilen Fasern bzw. die textilen Garne ausgewählt sind aus der Gruppe von (i) Naturfasern und/oder Naturgarnen, insbesondere Wolle und Baumwolle, vorzugsweise Baumwolle; (ii) synthetischen Fasern (Chemiefasern) und/oder synthetischen Garnen, insbesondere cellulosebasierten Fasern und/oder cellulosebasierten Garnen, vorzugsweise Viskosefasern und/oder Viskosegarnen. Insbesondere weisen die vorgenannten Materialien spezielle elektrostatische Eigenschaften auf, was zu einer verbesserten Filterung bzw. Zurückhaltung von Krankheitserregern bzw. Keimen führen kann, da diese sozusagen besser an dem Material haften können.

Auf Basis der Verwendung der vorgenannten Fasern bzw. Garne können somit besonders gute Eigenschaften hinsichtlich der Entfernung von Keimen aus Luft bzw. Atemluft erreicht werden. Ohne sich auf diese Theorie beschränken oder berufen zu wollen, weisen die vorgenannten Fasern bzw. Garne gleichermaßen eine gewisse Proteinaffinität auf, was gleichermaßen zu einer verbesserten Abfilterung von Keimen führt. Zudem ermöglichen diese Materialien zum anderen auch eine gute Interaktion bzw. Haftung in Bezug auf das aufzubringende Biopolymer.

Im Allgemeinen kann es erfindungsgemäß vorgesehen sein, dass das antimikrobielle Biopolymer in die Atemschutzmaske und/oder in das textile Flächengebilde, insbesondere in das textile Flächengebilde, eingearbeitet bzw. inkorporiert ist, insbesondere in die Fasern und/oder Garne der Atemschutzmaske bzw. des textilen Flächengebildes, vorzugsweise mittels Imprägnieren, Eintauchen, Einmischen, Einwaschen, Einspinnen, chemischen Behandlungsverfahren oder dergleichen. Hierdurch kann eine dauerhafte und gleichmäßige Ausrüstung mit dem antimikrobiellen Biopolymer bereitgestellt werden.

Erfindungsgemäß kann es sich darüber hinaus auch derart verhalten, dass das antimikrobielle Biopolymer auf die Atemschutzmaske und/oder auf das textile Flächengebilde, insbesondere auf das textile Flächengebilde, aufgebracht bzw. aufgetragen ist, insbesondere auf die Fasern und/oder Garne der Atemschutzmaske und/oder des textilen Flächengebildes, vorzugsweise mittels Auftragen, Aufsprühen, Beschichten, Befilmen, Einbringen, Einmischen, Eintauchen, Einwaschen und/oder Imprägnieren oder dergleichen.

Gemäß einer erfindungsgemäßen Ausführungsform ist es insbesondere vorgesehen, dass die Atemschutzmaske bzw. das textile Flächengebilde, insbesondere das textile Flächengebilde, zumindest im Wesentlichen vollständig und/oder zumindest im Wesentlichen vollflächig mit dem antimikrobiellen Biopolymer ausgerüstet ist.

Erfindungsgemäß ist es zudem möglich, dass die Atemschutzmaske bzw. das textile Flächengebilde, insbesondere das textile Flächengebilde, zumindest teilweise und/oder zumindest abschnittsweise mit dem antimikrobiellen Biopolymer ausgerüstet ist, insbesondere wobei zumindest der im Tragezustand der Mundöffnung und/oder den Nasenöffnungen zugeordnete Abschnitt der Atemschutzmaske und/oder des textilen Flächengebildes mit dem antimikrobiellen Biopolymer ausgerüstet ist.

Gemäß einer erfindungsgemäß bevorzugten Ausführungsform kann die Atemschutzmaske bzw. das textile Flächengebilde, insbesondere das textile Flächengebilde, beidseitig mit dem antimikrobiellen Biopolymer ausgerüstet sein, insbesondere auf der im Tragezustand dem Träger zugewandten und abgewandten Seite der Atemschutzmaske und/oder des textilen Flächengebildes. Hierdurch können die Filter- bzw. Schutzeigenschaften der Atemschutzmaske weiterführend verbessert werden.

Erfindungsgemäß kann es aber auch vorgesehen sein, dass die Atemschutzmaske und/oder das textile Flächengebilde, insbesondere das textile Flächengebilde, einseitig mit dem antimikrobiellen Biopolymer ausgerüstet ist, insbesondere auf der im Tragezustand dem Träger zugewandten oder abgewandten Seite der Atemschutzmaske und/oder des textilen Flächengebildes.

Erfindungsgemäß kann es vorgesehen sein, dass das antimikrobielle Biopolymer in Form einer Beschichtung und/oder Imprägnierung auf die Atemschutzmaske und/oder das textile Flächengebilde, insbesondere auf das textile Flächengebilde, aufgebracht ist und/oder in Form einer Beschichtung und/oder Imprägnierung vorliegt.

In diesem Zusammenhang kann das antimikrobielle Biopolymer auf die Atemschutzmaske und/oder auf das textile Flächengebilde, insbesondere auf das textile Flächengebilde, in Form eines Films und/oder einer Schicht, insbesondere Monofilms und/oder Monoschicht, aufgebracht bzw. aufgetragen sein, insbesondere auf die Fasern und/oder Garne der Atemschutzmaske und/oder des textilen Flächengebildes.

Insbesondere kann das antimikrobielle Biopolymer in der Atemschutzmaske und/oder in dem textilen Flächengebilde, insbesondere in dem textilen Flächengebilde, in Form eines Films und/oder einer Schicht, insbesondere Monofilms und/oder Monoschicht, vorliegen.

Auch diese Ausgestaltung der vorliegenden Erfindung geht mit entsprechenden Vorteilen hinsichtlich der Filter- bzw. Schutzeigenschaften einher.

Erfindungsgemäß kann es weiterhin vorgesehen sein, dass die Atemschutzmaske bzw. das textile Flächengebilde, insbesondere das textile Flächengebilde, unter Verwendung der erfindungsgemäßen Zusammensetzung, wie nachfolgend definiert, mit dem antimikrobiellen Biopolymer ausgerüstet ist. Hierzu kann auch auf nachfolgende Ausführungen zu der Zusammensetzung nach der Erfindung verwiesen werden.

Insbesondere in diesem Zusammenhang ist es erfindungsgemäß vorgesehen, dass das textile Flächengebilde weiterhin mindestens ein Additiv, wie es insbesondere auch in der Zusammensetzung nach der Erfindung eingesetzt wird, aufweist bzw. hiermit ausgerüstet ist.

Diesbezüglich ist das Additiv ausgewählt aus der Gruppe von Milchsäure, Mandelsäure, Salicylsäure und Ascorbinsäure; sowie deren Mischungen und Kombinationen.

Die vorgenannten Additive führen insbesondere zu einer verbesserten Verfügbarkeit, insbesondere Bioverfügbarkeit, des antimikrobiellen Biopolymers, in der damit ausgerüsteten Atemschutzmaske bzw. im Hinblick auf die zu neutralisierenden Krankheitserreger bzw. Keime. Zudem kann unter Verwendung der in Rede stehenden Additive die Dauerhaftigkeit bzw. Beständigkeit der Ausrüstung der Atemschutzmaske bzw. des textilen Flächengebildes mit dem antimikrobiellen Biopolymer verbessert werden, beispielsweise auf Basis einer Erhöhung der Haftung des antimikrobiellen Biopolymers auf der Atemschutzmaske bzw. dem textilen Flächengebilde. Zudem führen die Additive auch zu einer besonders homogen ausgebildeten Ausrüstung mit dem Biopolymer.

Im Allgemeinen kommen folgende Mengen für das Additiv in Betracht:
- So kann die Atemschutzmaske bzw. das textile Flächengebilde, insbesondere das textile Flächengebilde, das Additiv in einer Menge im Bereich von 0,0001 Gew.-% bis 5 Gew.-%, insbesondere im Bereich von 0,001 Gew.-% bis 3 Gew.-%, vorzugsweise im Bereich von 0,005 Gew.-% bis 1 Gew.-%, bezogen auf die Atemschutzmaske und/oder das textile Flächengebilde, insbesondere das textile Flächengebilde, enthalten.
- Gleichermaßen kann die Atemschutzmaske bzw. das textile Flächengebilde, insbesondere das textile Flächengebilde, das Additiv in einer Menge im Bereich von 0,01 g/m² bis 20 g/m², insbesondere im Bereich von 0,05 g/m² bis 10 g/m², vorzugsweise im Bereich von 0,1 g/m² bis 5 g/m², bezogen auf die Atemschutzmaske und/oder das textile Flächengebilde, insbesondere das textile Flächengebilde, enthalten.
- Die erfindungsgemäße Atemschutzmaske kann insbesondere derart ausgebildet sein, dass die Anforderungen an Schutzmasken vom Typ MNS gemäß der Normen DIN EN 14683, Typ I-III und/oder ASTMF 2100, Level 1 bis Level 3, erfüllt sind. Darüber hinaus kann die erfindungsgemäße Atemschutzmaske kann insbesondere derart ausgebildet sein, dass die Anforderungen an partikelfiltrierende Atemschutzmasken gemäß der Norm DIN EN 149, Geräteklassen FFP1, FFP2 oder FFP3, erfüllen sind.

Im Rahmen der vorliegenden Erfindung wird somit eine Atemschutzmaske mit antimikrobiellen Eigenschaften bereitgestellt, und zwar auf Basis einer ziel- und zweckgerichteten Ausrüstung mit einem speziellen antimikrobiellen Biopolymer, wobei diesbezüglich insbesondere die vorliegend beschriebene spezielle Zusammensetzung zur Ausrüstung eingesetzt wird, wie nachfolgend angeführt.

Zu weiteren Ausführungen zu der erfindungsgemäßen Atemschutzmaske gemäß dem vorliegenden Aspekt kann auch auf die nachfolgend angeführten Aspekte der vorliegenden Erfindung verwiesen werden.

Vorliegend beschrieben ist auch die Verwendung eines antimikrobiellen Biopolymers, insbesondere eines antimikrobiellen Biopolymers mit Proteinaffinität, nämlich eines Chitosans bzw. dessen Derivats oder Salzes, bevorzugt eines Chitosans, zur Ausrüstung bzw. zum Erhalt einer Atemschutzmaske, insbesondere eines textilen Flächengebildes (textiles Flächenmaterial) einer Atemschutzmaske, insbesondere wie zuvor definiert, mit antimikrobiellen Eigenschaften.

Dabei kann das Biopolymer insbesondere wie folgt ausgebildet sein:
- So weist das antimikrobielle Biopolymer ein gewichtsmittleres Molekulargewicht (Molmasse) M_{w} im Bereich von 1.500 Da bis 9.499 Da auf.

Auch im Hinblick auf die vorliegend beschriebene Verwendung kann das antimikrobielle Biopolymer acetylierte funktionelle Gruppen, insbesondere acetylierte Aminogruppen, aufweisen. Erfindungsgemäß ist es dabei vorgesehen, dass das antimikrobielle Biopolymer einen Acetylierungsgrad von mindestens 5 %, bezogen auf die acetylierbaren funktionellen Gruppen, insbesondere Aminogruppen, des Biopolymers, aufweist. Insbesondere kann das antimikrobielle Biopolymer einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers, aufweisen. Folglich kann es erfindungsgemäß vorgesehen sein, dass das antimikrobielle Biopolymer insbesondere einen Acetylierungsgrad im Bereich von 5 % bis 15 %, bezogen auf die acetylierbaren funktionellen Gruppen, insbesondere Aminogruppen, des Biopolymers, aufweist.

Zudem kann es sich auch im Hinblick auf die vorliegend beschriebene Verwendung derart verhalten, dass das antimikrobielle Biopolymer eine Eigenschaft, ausgewählt aus der Gruppe von (i) antiviralen Eigenschaften, insbesondere viruziden und virustatischen Eigenschaften; (ii) antibakteriellen Eigenschaften, insbesondere bakteriziden und bakteriostatischen Eigenschaften; (iii) antimykotischen (antifungalen) Eigenschaften, insbesondere fungistatischen und fungiziden Eigenschaften; (iv) antialgischen Eigenschaften, insbesondere algistatischen und algiziden Eigenschaften; und (v) deren Kombinationen, aufweist.

Diesbezüglich kann das antimikrobielle Biopolymer eine Eigenschaft, ausgewählt aus der Gruppe von (i) antiviralen Eigenschaften, insbesondere viruziden und virustatischen Eigenschaften; und (ii) antibakteriellen Eigenschaften, insbesondere bakteriziden und bakteriostatischen Eigenschaften; und deren Kombinationen, aufweisen.

Insbesondere kann das antimikrobielle Biopolymer antivirale Eigenschaften, insbesondere viruzide und/oder virustatische Eigenschaften, aufweisen, insbesondere gegen Viren aus der Gruppe von Coronaviren, Rhinoviren, Influenzaviren, Parainfluenzaviren, Respiratory-Syncytial-Viren und Adenoviren oder deren Kombinationen, vorzugsweise Coronaviren, bevorzugt SARS-CoV-2.

Im Rahmen der vorliegend beschriebenen Verwendung wird das antimikrobielle Biopolymer gemeinsam mit mindestens einem Additiv verwendet bzw. eingesetzt: In diesem Zusammenhang wird das Additiv ausgewählt aus der Gruppe von Milchsäure, Mandelsäure, Salicylsäure und Ascorbinsäure; sowie deren Mischungen und Kombinationen.

Im Hinblick auf die vorliegend beschriebene Verwendung kann es zudem vorgesehen sein, dass das antimikrobielle Biopolymer auf Basis der vorliegend beschriebenen Zusammensetzung, wie nachfolgend definiert, verwendet wird.

Für weitergehende Einzelheiten zu der vorliegend beschriebenen Verwendung kann auf die Ausführungen zu den übrigen Aspekten verwiesen werden, welche in Bezug auf die vorliegend beschriebene Verwendung entsprechend gelten.

Im Rahmen der vorliegend beschriebenen Verwendung können besonders leistungsfähige Atemschutzmasken mit hoher Schutzfunktion gegenüber den zugrundeliegenden Krankheitserregern bzw. Keimen bereitgestellt werden.

Vorliegend beschrieben ist auch ein Filterelement (Luftfilter, Luftfilterelement), vorzugsweise in Form eines textilen Flächengebildes (textiles Flächenmaterial), bevorzugt mit partikel- und/oder aerosolfiltrierenden Eigenschaften und/oder bevorzugt zur Verringerung von infektiösen Krankheitserregern und/oder der Keim- und Viruslast in Luft, insbesondere bei epidemischer oder pandemischer Ausbreitung von Infektionskrankheiten, wie COVID-19, vorzugsweise zur Verwendung als textiles Flächengebilde in einer Atemschutzmaske, insbesondere wie zuvor definiert, und/oder zur Herstellung einer Atemschutzmaske, insbesondere wie zuvor definiert,
wobei das Filterelement mit mindestens einem antimikrobiellen Biopolymer, insbesondere mit mindestens einem antimikrobiellen Biopolymer mit Proteinaffinität, nämlich mit mindestens einem Chitosan und/oder dessen Derivat oder Salz, bevorzugt mit mindestens einem Chitosan, ausgerüstet ist.

Das vorliegend beschriebene Filterelement weist gleichermaßen hervorragende Schutzeigenschaften gegenüber den zugrundeliegenden Krankheitserregern bzw. Keimen auf.

Das vorliegend beschriebene Filterelement kann dabei auch in Filtervorrichtungen, insbesondere zur Aufreinigung von Luft, eingesetzt werden.

Im Allgemeinen kann das Filterelement das antimikrobielle Biopolymer in einer Menge von mindestens 0,001 Gew.-%, insbesondere mindestens 0,005 Gew.-%, vorzugsweise mindestens 0,01 Gew.-%, bevorzugt mindestens 0,05 Gew.-%, besonders bevorzugt mindestens 0,1 Gew.-%, bezogen auf das Filterelement. Insbesondere kann das Filterelement das antimikrobielle Biopolymer in einer Menge von höchstens 20 Gew.-%, insbesondere höchstens 15 Gew.-%, vorzugsweise höchstens 10 Gew.-%, bevorzugt höchstens 5 Gew.-%, besonders bevorzugt höchstens 3 Gew.-%, bezogen auf das Filterelement, enthalten. Diesbezüglich kann das Filterelement das antimikrobielle Biopolymer in einer Menge im Bereich von 0,001 Gew.-% bis 20 Gew.-%, insbesondere im Bereich von 0,005 Gew.-% bis 15 Gew.-%, vorzugsweise im Bereich von 0,01 Gew.-% bis 10 Gew.-%, bevorzugt im Bereich von 0,05 Gew.-% bis 5 Gew.-%, besonders bevorzugt im Bereich von 0,1 Gew.-% bis 3 Gew.-%, bezogen auf das Filterelement, enthalten.

Zudem kann das Filterelement das antimikrobielle Biopolymer in einer Menge von mindestens 0,1 g/m², insbesondere mindestens 0,2 g/m², vorzugsweise mindestens 0,5 g/m², bevorzugt mindestens 0,75 g/m², besonders bevorzugt mindestens 1 g/m², bezogen auf das Filterelement, enthalten. Gleichermaßen kann das Filterelement das antimikrobielle Biopolymer in einer Menge von höchstens 200 g/m², insbesondere höchstens 100 g/m², vorzugsweise höchstens 50 g/m², bevorzugt höchstens 10 g/m², besonders bevorzugt höchstens 5 g/m², bezogen auf das Filterelement, enthalten. Diesbezüglich kann das Filterelement das antimikrobielle Biopolymer in einer Menge im Bereich von 0,1 g/m² bis 200 g/m², insbesondere im Bereich von 0,2 g/m² bis 100 g/m², vorzugsweise im Bereich von 0,5 g/m² bis 50 g/m², bevorzugt im Bereich von 0,75 g/m² bis 10 g/m², besonders bevorzugt im Bereich von 1 g/m² bis 5 g/m², bezogen auf das Filterelement, enthalten.

Darüber hinaus kann das antimikrobielle Biopolymer auch in Bezug auf das Filterelement als solches insbesondere wie folgt ausgebildet sein:
- Das antimikrobielle Biopolymer weist ein gewichtsmittleres Molekulargewicht (Molmasse) M_{w} im Bereich von 1.500 Da bis 9.499 Da auf.
- Das antimikrobielle Biopolymer weist acetylierte funktionelle Gruppen, insbesondere acetylierte Aminogruppen, auf.
Erfindungsgemäß ist es dabei vorgesehen, dass das antimikrobielle Biopolymer einen Acetylierungsgrad von mindestens 5 %, bezogen auf die acetylierbaren funktionellen Gruppen des Biopolymers, aufweist. Insbesondere kann das antimikrobielle Biopolymer insbesondere einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers, aufweisen. Folglich kann es erfindungsgemäß vorgesehen sein, dass das antimikrobielle Biopolymer insbesondere einen Acetylierungsgrad im Bereich von 5 % bis 15 %, bezogen auf die acetylierbaren funktionellen Gruppen, insbesondere Aminogruppen, des Biopolymers, aufweist.

Insbesondere kann das antimikrobielle Biopolymer eine Eigenschaft, ausgewählt aus der Gruppe von (i) antiviralen Eigenschaften, insbesondere viruziden und virustatischen Eigenschaften; (ii) antibakteriellen Eigenschaften, insbesondere bakteriziden und bakteriostatischen Eigenschaften; (iii) antimykotischen (antifungalen) Eigenschaften, insbesondere fungistatischen und fungiziden Eigenschaften; (iv) antialgischen Eigenschaften, insbesondere algistatischen und algiziden Eigenschaften; und (v) deren Kombinationen, aufweisen. Gleichermaßen kann das antimikrobielle Biopolymer eine Eigenschaft, ausgewählt aus der Gruppe von (i) antiviralen Eigenschaften, insbesondere viruziden und virustatischen Eigenschaften; und (ii) antibakteriellen Eigenschaften, insbesondere bakteriziden und bakteriostatischen Eigenschaften; und deren Kombinationen, aufweisen. Insbesondere kann es erfindungsgemäß vorgesehen sein, dass das antimikrobielle Biopolymer antivirale Eigenschaften, insbesondere viruzide und/oder virustatische Eigenschaften, aufweist, insbesondere gegen Viren aus der Gruppe von Coronaviren, Rhinoviren, Influenzaviren, Parainfluenzaviren, Respiratory-Syncytial-Viren und Adenoviren oder deren Kombinationen, vorzugsweise Coronaviren, bevorzugt SARS-CoV-2.

Im Allgemeinen kann das Filterelement bakterienhemmend und/oder virenhemmend und/oder pilzhemmend und/oder algenhemmend, insbesondere bakterienhemmend und/oder virenhemmend, vorzugsweise virenhemmend, ausgebildet sein. Zudem kann das Filterelement mit einer bakterienhemmenden und/oder virenhemmenden und/oder pilzhemmenden und/oder algenhemmenden Ausrüstung, insbesondere mit einer bakterienhemmenden und/oder virenhemmenden Ausrüstung, vorzugsweise mit einer virenhemmenden Ausrüstung, versehen sein, insbesondere auf Basis des antimikrobiellen Biopolymers.

Erfindungsgemäß kann das Filterelement ein Gewebe, Gewirke, Gestricke, Gesticke, Gelege oder ein Textilverbundstoff, insbesondere ein Vlies oder Gewebe, sein oder umfassen. Zudem kann das Filterelement ein insbesondere offenporiger Schaumstoff sein oder umfassen. Insbesondere kann das Filterelement flächig oder dreidimensional ausgebildet sein.

In diesem Zusammenhang kann das Filterelement ein Flächengewicht im Bereich von 10 g/m² bis 1.000 g/m², insbesondere im Bereich von 20 g/m² bis 750 g/m², vorzugsweise im Bereich von 30 g/m² bis 600 g/m², bevorzugt im Bereich von 50 g/m² bis 500 g/m², aufweisen.

Im Allgemeinen kann das Filterelement aus textilen Fasern und/oder textilen Garnen bestehen bzw. textile Fasern und/oder textile Garne aufweisen. In diesem Zusammenhang können die textilen Fasern bzw. die textilen Garne ausgewählt sein aus der Gruppe von (i) Naturfasern und/oder Naturgarnen, insbesondere Wolle und Baumwolle; (ii) synthetischen Fasern (Chemiefasern) und/oder synthetischen Garnen, insbesondere cellulosebasierten Fasern und/oder cellulosebasierten Garnen, vorzugsweise Viskosefasern und/oder Viskosegarnen; (iii) Fasern und/oder Garnen, enthaltend ein Material oder bestehend aus einem Material aus der Gruppe von Polyestern (PES), Polyolefinen, wie Polyethylen (PE) und Polypropylen (PP), Polyvinylchlorid (CLF), Polyvinylidenchlorid (CLF), Acetat (CA), Triacetat (CTA), Polyacryl (PAN), Polyamid (PA), Polyvinylalkohol (PVAL), Polyurethanen, Polyvinylestern, (Meth-)Acrylaten sowie deren Mischungen und Kombinationen; und (iv) Mischungen sowie Kombinationen der unter (i) bis (iii) angeführten Fasern und/oder Garne. Insbesondere können die textilen Fasern ausgewählt sein aus der Gruppe von (i) Naturfasern und/oder Naturgarnen, insbesondere Wolle und Baumwolle, vorzugsweise Baumwolle; (ii) synthetischen Fasern (Chemiefasern) und/oder synthetischen Garnen, insbesondere cellulosebasierten Fasern und/oder cellulosebasierten Garnen, vorzugsweise Viskosefasern und/oder Viskosegarnen. Diesbezüglich können auch entsprechende Mischfasern und Mischgarne auf Basis der vorgenannten Komponenten eingesetzt sein.

Das Filterelement kann darüber hinaus auch als insbesondere offenporiger Schaumstoff ausgebildet sein, insbesondere auf Basis von Polyurethan oder dergleichen.

Vorliegend kann das antimikrobielle Biopolymer in das Filterelement eingearbeitet bzw. inkorporiert sein, insbesondere in die Fasern und/oder Garne des Filterelements, vorzugsweise mittels Imprägnieren, Eintauchen, Einmischen, Einwaschen, Einpolymerisieren, Einspinnen, chemischen Behandlungsverfahren oder dergleichen.

Zudem kann das antimikrobielle Biopolymer auf das Filterelement aufgebracht bzw. aufgetragen sein, insbesondere auf die Fasern und/oder Garne des Filterelements, vorzugsweise mittels Auftragen, Aufsprühen, Beschichten, Befilmen, Einbringen, Einmischen, Eintauchen, Einwaschen und/oder Imprägnieren oder dergleichen.

Insbesondere kann das Filterelement zumindest im Wesentlichen vollständig und/oder zumindest im Wesentlichen vollflächig mit dem antimikrobiellen Biopolymer ausgerüstet sein.

Demgegenüber kann das Filterelement gleichermaßen zumindest teilweise und/oder zumindest abschnittsweise mit dem antimikrobiellen Biopolymer ausgerüstet sein.

Insbesondere verhält es sich erfindungsgemäß derart, dass das Filterelement beidseitig mit dem antimikrobiellen Biopolymer ausgerüstet ist.

Demgegenüber kann es vorliegend auch vorgesehen sein, dass das Filterelement einseitig mit dem antimikrobiellen Biopolymer ausgerüstet ist.

Der Begriff "beidseitig" bzw. "einseitig" bezieht sich dabei insbesondere auf die Haupterstreckungsebene des Filterelements (wie auch der Atemschutzmaske bzw. des textilen Flächengebildes der Atemschutzmaske).

Vorliegend kann es vorgesehen sein, dass das antimikrobielle Biopolymer in Form einer Beschichtung bzw. Imprägnierung auf das Filterelement aufgebracht ist.

Vorliegend kann es insbesondere vorgesehen sein, dass das antimikrobielle Biopolymer auf das Filterelement in Form eines Films und/oder einer Schicht, insbesondere Monofilms und/oder Monoschicht, aufgebracht bzw. aufgetragen ist, insbesondere auf die Fasern und/oder Garne des Filterelements. Vorliegend kann das antimikrobielle Biopolymer in dem Filterelement in Form eines Films und/oder einer Schicht, insbesondere Monofilms und/oder Monoschicht, vorliegen.

Das Filterelement kann vorliegend unter Verwendung der erfindungsgemäßen Zusammensetzung, wie nachfolgend definiert, mit dem antimikrobiellen Biopolymer ausgerüstet sein.

Insbesondere kann es in diesem Zusammenhang vorliegend vorgesehen sein, dass das Filterelement mindestens ein Additiv aufweist:
Diesbezüglich kann das Additiv ausgewählt sein aus der Gruppe Milchsäure, Mandelsäure, Salicylsäure und Ascorbinsäure; sowie deren Mischungen und Kombinationen.

Im Allgemeinen kann das Filterelement das Additiv in einer Menge im Bereich von 0,0001 Gew.-% bis 5 Gew.-%, insbesondere im Bereich von 0,001 Gew.-% bis 3 Gew.-%, vorzugsweise im Bereich von 0,005 Gew.-% bis 1 Gew.-%, bezogen auf die Atemschutzmaske und/oder das textile Flächengebilde, insbesondere das textile Flächengebilde, enthalten. Zudem kann das Filterelement das Additiv in einer Menge im Bereich von 0,01 g/m² bis 20 g/m², insbesondere im Bereich von 0,05 g/m² bis 10 g/m², vorzugsweise im Bereich von 0,1 g/m² bis 5 g/m², bezogen auf das Filterelement, enthalten.

Für weitergehende Einzelheiten zu dem vorliegend beschriebenen Filterelement kann auf die Ausführungen zu den übrigen Aspekten verwiesen, welche für das vorliegend beschriebene Filterelement entsprechend gelten.

Vorliegend beschrieben ist auch die Verwendung eines antimikrobiellen Biopolymers, insbesondere eines antimikrobiellen Biopolymers mit Proteinaffinität, nämlich eines Chitosans und/oder dessen Derivats oder Salzes, bevorzugt eines Chitosans, zur Ausrüstung bzw. zum Erhalt eines Filterelements, insbesondere eines textilen Filterelements, vorzugsweise in Form eines textilen Flächengebildes (textiles Flächenmaterial), insbesondere wie zuvor definiert, mit antimikrobiellen Eigenschaften.

In diesem Zusammenhang weist das antimikrobielle Biopolymer ein gewichtsmittleres Molekulargewicht (Molmasse) M_{w} im Bereich von 1.500 Da bis 9.499 Da auf.

Vorliegend weist das antimikrobielle Biopolymer acetylierte funktionelle Gruppen, insbesondere acetylierte Aminogruppen, auf. Diesbezüglich ist es vorgesehen, dass das antimikrobielle Biopolymer einen Acetylierungsgrad von mindestens 5 %, bezogen auf die acetylierbaren funktionellen Gruppen, insbesondere Aminogruppen, des Biopolymers, aufweist. Insbesondere kann das antimikrobielle Biopolymer einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers, aufweisen. Folglich kann es vorgesehen sein, dass das antimikrobielle Biopolymer einen Acetylierungsgrad im Bereich von 5 % bis 15 %, bezogen auf die acetylierbaren funktionellen Gruppen, insbesondere Aminogruppen, des Biopolymers, aufweist.

Vorliegend kann das antimikrobielle Biopolymer eine Eigenschaft, ausgewählt sein der Gruppe von (i) antiviralen Eigenschaften, insbesondere viruziden und virustatischen Eigenschaften; (ii) antibakteriellen Eigenschaften, insbesondere bakteriziden und bakteriostatischen Eigenschaften; (iii) antimykotischen (antifungalen) Eigenschaften, insbesondere fungistatischen und fungiziden Eigenschaften; (iv) antialgischen Eigenschaften, insbesondere algistatischen und algiziden Eigenschaften; und (v) deren Kombinationen, aufweisen. Darüber hinaus kann das antimikrobielle Biopolymer eine Eigenschaft, ausgewählt sein aus der Gruppe von (i) antiviralen Eigenschaften, insbesondere viruziden und virustatischen Eigenschaften; und (ii) antibakteriellen Eigenschaften, insbesondere bakteriziden und bakteriostatischen Eigenschaften; und deren Kombinationen, aufweisen. Schließlich kann das antimikrobielle Biopolymer antivirale Eigenschaften, insbesondere viruzide und/oder virustatische Eigenschaften, aufweisen, insbesondere gegen Viren aus der Gruppe von Coronaviren, Rhinoviren, Influenzaviren, Parainfluenzaviren, Respiratory-Syncytial-Viren und Adenoviren oder deren Kombinationen, vorzugsweise Coronaviren, bevorzugt SARS-CoV-2.

Vorliegend ist es zudem vorgesehen, dass das antimikrobielle Biopolymer gemeinsam mit mindestens einem Additiv verwendet wird.

Das Additiv ist ausgewählt aus der Gruppe von Milchsäure, Mandelsäure, Salicylsäure und Ascorbinsäuresowie deren Mischungen und Kombinationen.

In diesem Zusammenhang kann das antimikrobielle Biopolymer auf Basis einer Zusammensetzung, wie nachfolgend definiert, verwendet bzw. eingesetzt werden.

Für weitere Einzelheiten zu der vorliegend beschriebenen Verwendung gemäß diesem Aspekt kann auf die Ausführungen zu den übrigen Aspekten verwiesen werden, welche in Bezug auf die vorliegend beschriebene Verwendung gemäß dem vorliegenden Aspekt entsprechend gelten.

Vorliegend beschrieben ist zudem eine Zusammensetzung, insbesondere wässrige Zusammensetzung, vorzugsweise in Form einer Lösung oder Dispersion, bevorzugt in Form einer wässrig ausgebildeten und/oder insbesondere wässrig basierten Lösung oder Dispersion, vorzugsweise zur Ausrüstung bzw. zum Erhalt einer Atemschutzmaske, insbesondere wie zuvor definiert, und/oder vorzugsweise eines textilen Flächengebildes (textilen Flächengebildes), insbesondere als Bestandteil oder in Form einer Atemschutzmaske, insbesondere wie zuvor definiert, und/oder eines Filterelements, insbesondere wie zuvor definiert, mit mindestens einem antimikrobiellen Biopolymer und/oder mit antimikrobiellen Eigenschaften,
wobei die Zusammensetzung die folgenden Inhaltsstoffe enthält:
(a) mindestens ein antimikrobielles Biopolymer, insbesondere mindestens ein antimikrobielles Biopolymer mit Proteinaffinität, nämlich mindestens ein Chitosan und/oder dessen Derivat und/oder Salz, bevorzugt mindestens ein Chitosan;
(b) mindestens ein Additiv, insbesondere mindestens ein Additiv zur Verbesserung der Verteilung und/oder der Homogenisierung des (a) Biopolymers, vorzugsweise mindestens ein Additiv zur Verbesserung der Löslichkeit und/oder der Dispergierbarkeit des (a) Biopolymers,
   wobei das Additiv ausgewählt ist aus der Gruppe von Lösungsvermittlern, Dispergiermitteln (Dispergatoren) und Komplexbildnern sowie deren Mischungen und Kombinationen, insbesondere ausgewählt aus der Gruppe von Lösungsvermittlern, Dispergiermitteln sowie deren Mischungen und Kombinationen; und
(c) mindestens ein Trägermedium, insbesondere mindestens ein bei Raumtemperatur (20 °C) und Umgebungsdruck (1.013,25 hPa) flüssiges Trägermedium, vorzugsweise in Form eines Lösemittels (Lösungsmediums) oder Dispersionsmediums (Dispersionmittels), vorzugsweise Wasser.

Was die vorliegend beschriebene Zusammensetzung anbelangt, so hat die Anmelderin in überraschender Weise gefunden, dass sich eine derartige Zusammensetzung im hohen Maße zur Ausrüstung bzw. zum Erhalt insbesondere von Atemschutzmasken bzw. diesbezüglichen textilen Flächengebilden sowie weiterführend von insbesondere textilen Filterelementen bzw. Luftfilterelementen mit dem antimikrobiellen Biopolymer eignet, wobei unter Einsatz der Zusammensetzung eine gleichmäßige und dauerhafte Ausrüstung des zugrundeliegenden Gegenstands mit dem antimikrobiellen Biopolymer gewährleistet ist.

Durch den ziel- und zweckgerichteten Einsatz eines Additivs, wie vorliegend definiert, werden zudem Zusammensetzungen mit einer homogenen Verteilung des antimikrobiellen Biopolymers bei gleichzeitig hoher (Lager-)Stabilität erhalten. Durch die Interaktion zwischen antimikrobiellem Biopolymer und Additiv kann dabei insbesondere - ohne sich auf diese Theorie beschränken oder sich hierauf berufen zu wollen - die Löslichkeit bzw. Dispersionsfähigkeit des antimikrobiellen Biopolymers in dem Trägermedium, insbesondere Wasser, verbessert werden. Dies führt auch zu einer verbesserten (Bio-)Verfügbarkeit des antimikrobiellen Biopolymers im Hinblick auf die Ausrüstung insbesondere von Atemschutzmasken oder Filterelementen, einhergehend mit einer Wirksamkeitssteigerung in Bezug auf die durch das antimikrobielle Biopolymer bereitgestellten antimikrobiellen Eigenschaften.

Auf Basis der vorliegenden Konzeption kann zudem auch bei relativ hohen (d. h. insbesondere pH-Werten im neutralen Bereich bzw. geringfügig niedriger als pH 7) eine gute Inkorporierung auf Basis der Ausbildung einer stabilen Lösung bzw. Dispersion des antimikrobiellen Biopolymers in dem Trägermedium bzw. in der Zusammensetzung gewährleistet werden, einhergehend mit entsprechenden Vorteilen hinsichtlich der Anwendbarkeit, Wirkeffizienz und Stabilität der Zusammensetzung.

Ohne sich auf diese Theorie beschränken oder berufen zu wollen, wird die Erhöhung der Stabilität der vorliegend beschriebenen Zusammensetzung bzw. die verbesserten Löslichkeits- bzw. Dispersionseigenschaften des antimikrobiellen Biopolymers in der Zusammensetzung durch eine gezielte Interaktion, beispielsweise auf Basis von Komplexbildungsvorgängen oder dergleichen des Additivs mit dem antimikrobiellen Biopolymer hervorgerufen bzw. gewährleistet.

Insbesondere kann die Zusammensetzung im Allgemeinen einen pH-Wert von höchstens 7, insbesondere höchstens 6,75, vorzugsweise höchstens 6,5, bevorzugt höchstens 6,25, besonders bevorzugt höchstens 6, ganz besonders höchstens 5,4, weiter bevorzugt höchstens 4,9 aufweisen. Zudem kann es vorgesehen sein, dass die Zusammensetzung einen pH-Wert im Bereich von 2 bis 7, insbesondere im Bereich von 2,5 bis 6,75, vorzugsweise im Bereich von 3 bis 6,5, bevorzugt im Bereich von 3,5 bis 6,25, besonders bevorzugt im Bereich von 4 bis 6, ganz besonders bevorzugt im Bereich von 4 bis 5,4, weiter bevorzugt im Bereich von 4 bis 4,9, aufweist. Insbesondere kann durch die Einstellung bzw. Vorgabe kleinerer pH-Werte die Inkorporation des antimikrobiellen Biopolymers nochmals verbessert werden. Die Einstellung des pH-Wertes der zugrundeliegenden Zusammensetzung kann in dem Fachmann geläufiger Weise erfolgen, beispielsweise unter Einsatz entsprechender Säuren oder Basen bzw. Puffersysteme.

Was das (a) antimikrobielle Biopolymer anbelangt, so können die diesbezüglichen Mengen in der Zusammensetzung in weiten Bereichen variieren bzw. eingestellt werden. Vorliegend ist es jedoch im Allgemeinen vorgesehen, dass die Zusammensetzung das antimikrobielle Biopolymer in einer Menge von höchstens 25 Gew.-%, insbesondere höchstens 20 Gew.-%, vorzugsweise höchstens 15 Gew.- %, bevorzugt höchstens 10 Gew.-%, besonders bevorzugt höchstens 6 Gew.-%, bezogen auf die Zusammensetzung, enthält. Hierdurch wird bei entsprechend hoher Menge eine nach wie vor gute Inkorporation bzw. Einarbeitung des antimikrobiellen Biopolymers gewährleistet.

Zudem kann die Zusammensetzung das (a) antimikrobielle Biopolymer in einer Menge von mindestens 0,01 Gew.-%, insbesondere mindestens 0,05 Gew.-%, vorzugsweise mindestens 0,1 Gew.-%, bevorzugt mindestens 0,5 Gew.-%, besonders bevorzugt mindestens 1 Gew.-%, bezogen auf die Zusammensetzung, enthalten. Hierdurch wird insbesondere eine gute Wirkeffizienz gewährleistet.

Im Allgemeinen ist es vorliegend vorgesehen, dass die Zusammensetzung das (a) antimikrobielle Biopolymer in einer Menge im Bereich von 0,01 Gew.-% bis 25 Gew.- %, insbesondere im Bereich von 0,05 Gew.-% bis 20 Gew.-%, vorzugsweise im Bereich von 0,1 Gew.-% bis 15 Gew.-%, bevorzugt im Bereich von 0,5 Gew.-% bis 10 Gew.-%, besonders bevorzugt im Bereich von 1 Gew.-% bis 6 Gew.-%, bezogen auf die Zusammensetzung, enthält.

Weiterhin weist das für die Zusammensetzung eingesetzte antimikrobielle Biopolymer ein definiertes Molekulargewicht auf. Hierdurch wird insbesondere eine gute bzw. stabile Inkorporation des antimikrobiellen Biopolymers in der Zusammensetzung gewährleistet, wobei gleichermaßen in Bezug auf diesbezüglich ausgerüstete Gegenstände, wie Atemschutzmasken oder Filterelemente, eine hohe antimikrobielle Wirksamkeit gewährleistet wird.

Diesbezüglich weist das antimikrobielle Biopolymer ein gewichtsmittleres Molekulargewicht (Molmasse) M_{w} im Bereich von 1.500 Da bis 9.499 Da auf.

Vorliegend ist es zudem vorgesehen, dass das (a) antimikrobielle Biopolymer acetylierte funktionelle Gruppen, insbesondere acetylierte Aminogruppen, aufweist. Vorliegend ist es dabei vorgesehen, dass das antimikrobielle Biopolymer einen Acetylierungsgrad von mindestens 5 %, bezogen auf die acetylierbaren funktionellen Gruppen, insbesondere Aminogruppen, des Biopolymers aufweist. Insbesondere kann das antimikrobielle Biopolymer insbesondere einen Acetylierungsgrad von höchstens 40 %, insbesondere höchstens 30 %, vorzugsweise höchstens 25 %, bevorzugt höchstens 20 %, besonders bevorzugt höchstens 15 %, bezogen auf die acetylierbaren funktionellen Gruppen, insbesondere Aminogruppen, des Biopolymers aufweisen. Folglich kann es vorgesehen sein, dass das antimikrobielle Biopolymer insbesondere einen Acetylierungsgrad im Bereich von 2,1 % bis 40 %, insbesondere im Bereich von 2,5 % bis 30 %, vorzugsweise im Bereich von 3 % bis 25 %, bevorzugt im Bereich von 4 % bis 20 %, besonders bevorzugt im Bereich von 5 % bis 15 %, bezogen auf die acetylierbaren funktionellen Gruppen, insbesondere Aminogruppen, des Biopolymers, aufweist.

Das (a) antimikrobielle Biopolymer kann eine Eigenschaft, ausgewählt aus der Gruppe von (i) antiviralen Eigenschaften, insbesondere viruziden und virustatischen Eigenschaften; (ii) antibakteriellen Eigenschaften, insbesondere bakteriziden und bakteriostatischen Eigenschaften; (iii) antimykotischen (antifungalen) Eigenschaften, insbesondere fungistatischen und fungiziden Eigenschaften; (iv) antialgischen Eigenschaften, insbesondere algistatischen und algiziden Eigenschaften; und (v) deren Kombinationen, aufweisen.

Insbesondere kann das (a) antimikrobielle Biopolymer eine Eigenschaft, ausgewählt aus der Gruppe von (i) antiviralen Eigenschaften, insbesondere viruziden und virustatischen Eigenschaften; und (ii) antibakteriellen Eigenschaften, insbesondere bakteriziden und bakteriostatischen Eigenschaften; und deren Kombinationen, aufweisen.

Zudem kann das antimikrobielle Biopolymer antivirale Eigenschaften, insbesondere viruzide und/oder virustatische Eigenschaften, aufweisen, insbesondere gegen Viren aus der Gruppe von Coronaviren, Rhinoviren, Influenzaviren, Parainfluenzaviren, Respiratory-Syncytial-Viren und Adenoviren oder deren Kombinationen, vorzugsweise Coronaviren, bevorzugt SARS-CoV-2.

Auf Basis der vorliegend beschriebenen Verwendung eines speziellen antimikrobiellen Biopolymers kann somit sozusagen eine Breitbandwirkung bzw. antimikrobiellen Eigenschaften gegenüber einer Vielzahl von Krankheitserregern erreicht werden, und zwar insbesondere auch im Hinblick auf Coronaviren, wie insbesondere SARS-CoV-2.

Der Einsatz eines speziellen antimikrobiellen Biopolymers geht zudem mit dem weiteren Vorteil einher, dass hiermit ausgerüsteten Materialien eine glattere Oberfläche aufweisen können. So kann auf dieser Basis eine Glättung der Oberflächen insbesondere von für die Atemschutzmaske bzw. das Filterelement eingesetzten Garnen bzw. Fasern oder dergleichen eingestellt werden, einhergehend mit einer verringerten (Oberflächen-)Rauheit bzw. verringerten Aufrauhung des so behandelten Materials. Dies führt auch zu einem geringeren Verschleiß bei mechanischer Beanspruchung und zu einer verbesserten Haptik (Griffigkeit). Durch die Glättung kann zudem auch die Freisetzung von Mikropartikeln, insbesondere Mikroplastik im Fall von Kunstgarnen bzw. Kunstfasern, vermieden bzw. verringert werden.

Vorliegend kann die Zusammensetzung das Additiv in großen Mengenbereichen aufweisen.

Insbesondere im Hinblick auf die Gewährleistung einer optimalen Wirkeffizienz und optimalen Stabilisierung des antimikrobiellen Biopolymers als Wirksubstanz in der erfindungsgemäßen Zusammensetzung sind insbesondere die nachfolgenden Mengen von Vorteil:
- So kann die Zusammensetzung das (b) Additiv, insbesondere Additiv zur Verbesserung der Verteilung und/oder der Homogenisierung des (a) Biopolymers, bevorzugt des Chitosans, in einer Menge von höchstens 49 Gew.-%, insbesondere höchstens 45 Gew.-%, vorzugsweise höchstens 40 Gew.-%, bevorzugt höchstens 35 Gew.-%, besonders bevorzugt höchstens 32,5 Gew.-%, bezogen auf die Zusammensetzung, enthalten.
- Insbesondere kann die Zusammensetzung das (b) Additiv, insbesondere Additiv zur Verbesserung der Verteilung und/oder der Homogenisierung des (a) Biopolymers, bevorzugt des Chitosans, in einer Menge von mindestens 0,1 Gew.-%, insbesondere mindestens 0,5 Gew.-%, vorzugsweise mindestens 1 Gew.-%, bevorzugt mindestens 1,5 Gew.-%, besonders bevorzugt mindestens 2 Gew.-%, bezogen auf die Zusammensetzung, enthalten.
- Folglich kann es vorliegend insbesondere vorgesehen sein, dass die Zusammensetzung das (b) Additiv, insbesondere Additiv zur Verbesserung der Verteilung und/oder der Homogenisierung des (a) Biopolymers in einer Menge im Bereich von 0,1 Gew.-% bis 49 Gew.-%, insbesondere im Bereich von 0,5 Gew.-% bis 45 Gew.-%, vorzugsweise im Bereich von 1 Gew.-% bis 40 Gew.-%, bevorzugt im Bereich von 1,5 Gew.-% bis 35 Gew.-%, besonders bevorzugt im Bereich von 2 Gew.-% bis 32,5 Gew.-%, bezogen auf die Zusammensetzung, enthält.

Was das für die Zusammensetzung eingesetzte Additiv anbelangt, so lassen sich hinsichtlich der Zusammensetzung besonders gute Eigenschaften insbesondere im Hinblick auf Stabilität und Wirkeffizienz des antimikrobiellen Biopolymers realisieren, wenn das Additiv wie folgt ausgebildet ist:
So kann das (b) Additiv, insbesondere Additiv zur Verbesserung der Verteilung und/oder der Homogenisierung des (a) Biopolymers, ausgewählt sein aus der Gruppe von Milchsäure, Mandelsäure, Salicylsäure und Ascorbinsäure; sowie deren Mischungen und Kombinationen.

Zudem kann es vorgesehen sein, dass das (b) Additiv, insbesondere Additiv zur Verbesserung der Verteilung und/oder der Homogenisierung des (a) Biopolymers ausgewählt ist derart und/oder in einer Menge eingesetzt ist derart, dass das molare Verhältnis der funktionellen Gruppen des (b) Additivs, insbesondere das molare Verhältnis der funktionellen Gruppen des (b) Additivs, welche mit dem Biopolymer in Wechselwirkung zu treten und/oder zu interagieren imstande sind, vorzugsweise in Form von Hydroxylgruppen, Carboxylgruppen und/oder Carbonylgruppen, bevorzugt Hydroxylgruppen und/oder Carboxylgruppen, einerseits zu den acetylierten Gruppen, insbesondere zu den acetylierten Aminogruppen, des (a) Biopolymers andererseits im Bereich von 0,2 bis 2, insbesondere im Bereich von 0,3 bis 1,5, vorzugsweise im Bereich von 0,4 bis 1,3, bevorzugt im Bereich von 0,6 bis 1,25, liegt.

Zudem kann die Zusammensetzung das (a) Biopolymer und das (b) Additiv in einem gewichtsbezogenen Verhältnis von (a) Biopolymer, bevorzugt Chitosan, zu (b) Additiv im Bereich von 1 : 1 bis 1.000 : 1, insbesondere im Bereich von 2 : 1 bis 500 : 1, vorzugsweise im Bereich von 10 : 1 bis 2500 : 1, aufweisen.

Auf Basis der vorgenannten Maßnahmen hinsichtlich der speziellen chemischen Gruppen des (b) Additivs sowie der angeführten molaren bzw. gewichtsbezogenen Verhältnisse kann eine besonders gute Interaktion bzw. Wechselwirkung zwischen antimikrobiellem Biopolymer einerseits und Additiv andererseits vorliegen, einhergehend mit einer besonders guten Stabilisierung der Wirksubstanz in der Zusammensetzung bzw. Bereitstellung einer hohen Wirkeffizienz.

Wie zuvor angeführt, handelt es sich bei der vorliegend beschriebenen Zusammensetzung insbesondere um eine wässrige Zusammensetzung bzw. um eine wässrig basierte Zusammensetzung.

Vorliegend kann es insbesondere vorgesehen sein, dass die Zusammensetzung das (c) Trägermedium, vorzugsweise Wasser, in einer Menge von mindestens 10 Gew.- %, insbesondere mindestens 20 Gew.-%, vorzugsweise mindestens 30 Gew.-%, bevorzugt mindestens 40 Gew.-%, besonders bevorzugt mindestens 50 Gew.-%, bezogen auf die Zusammensetzung, enthält.

Zudem kann die Zusammensetzung das (c) Trägermedium, vorzugsweise Wasser, in einer Menge von höchstens 99,5 Gew.-%, insbesondere höchstens 99 Gew.-%, vorzugsweise höchstens 98 Gew.-%, bevorzugt höchstens 97 Gew.-%, besonders bevorzugt höchstens 95 Gew.-%, bezogen auf die Zusammensetzung, enthalten.

Vorliegend kann es somit im Allgemeinen vorgesehen sein, dass die Zusammensetzung das (c) Trägermedium, vorzugsweise Wasser, in einer Menge im Bereich von 10 Gew.-% bis 99,5 Gew.-%, insbesondere im Bereich von 20 Gew.-% bis 99 Gew.-%, vorzugsweise im Bereich von 30 Gew.-% bis 98 Gew.-%, bevorzugt im Bereich von 40 Gew.-% bis 97 Gew.-%, besonders bevorzugt im Bereich von 50 Gew.-% bis 95 Gew.-%, bezogen auf die Zusammensetzung, enthält.

Im Allgemeinen kann die Zusammensetzung zudem (d) mindestens einen weiteren Inhaltsstoff bzw. Hilfsstoff enthalten, insbesondere ausgewählt aus der Gruppe von Rheologieadditiven; Ölen; Konservierungsmitteln; Stabilisatoren, Säuren und/oder Basen; waschaktiven Substanzen, insbesondere Tensiden; entschäumenden Komponenten; Filmbildnern; Wachsen, biogenen Wirkstoffen; pH-Stabilisatoren; und pH-Einstellmitteln, insbesondere jeweils in Mengen im Bereich von 0,001 Gew.-% bis 20 Gew.-%, insbesondere im Bereich von 0,005 Gew.-% bis 10 Gew.-%, vorzugsweise im Bereich von 0,01 Gew.-% bis 5 Gew.-%, bezogen auf die Zusammensetzung. Die obigen Mengenangaben gelten dabei für einen jeweiligen Inhalts- bzw. Hilfsstoff als solchen.

In Bezug auf einsetzbare Öle können dabei beispielsweise kosmetische bzw. pharmazeutisch akzeptable Öle eingesetzt werden, wie beispielsweise Neutralöle, z. B. Caprylic/Capric-Triglyceride. Vorliegend kann die Zusammensetzung beispielsweise Schwarzkümmelöl aufweisen.

Gleichermaßen kann die Zusammensetzung zudem (d) mindestens ein Alkylpolyglucosid, insbesondere C₈- bis C₁₆-Alkylpolyglucosid, vorzugsweise C₈- bis C₁₄-Alkylpolyglucosid, insbesondere mit einem Polymerisationsgrad von 1 (Alkylmonoglucosid) bis 8, insbesondere 2 bis 5, enthalten, insbesondere in Mengen im Bereich von 0,005 Gew.-% bis 25 Gew.-%, insbesondere im Bereich von 0,01 Gew.-% bis 20 Gew.-%, vorzugsweise im Bereich von 0,1 Gew.-% bis 15 Gew.- %, bezogen auf die Zusammensetzung.

Zudem kann es grundsätzlich auch vorgesehen sein, dass die Zusammensetzung weiterhin (d) Cocamidopropylbetain enthält, insbesondere in Mengen im Bereich von 0,005 Gew.-% bis 20 Gew.-%, insbesondere im Bereich von 0,01 Gew.-% bis 15 Gew.-%, vorzugsweise im Bereich von 0,1 Gew.-% bis 10 Gew.-%, bezogen auf die Zusammensetzung.

Insbesondere kann die Zusammensetzung zudem (e) mehrwertige Kationen und/oder mehrwertige Metallionen, insbesondere zweiwertige Kationen und/oder zweiwertige Metallionen, vorzugsweise Erdalkalimetallionen, bevorzugt Calciumionen und/oder Magnesiumionen, enthalten.

In diesem Zusammenhang können die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, insbesondere unabhängig voneinander, in Form von Salzen, vorzugsweise in Form von anorganischen oder organischen Salzen, bevorzugt in Form von Carbonaten, Hydrogencarbonaten, Hydroxiden, Halogeniden und/oder halogenidhaltigen Salzen, eingesetzt sein oder vorliegen.

Vorliegend ist es insbesondere von Vorteil, wenn die Zusammensetzung die mehrwertigen Kationen und/oder die mehrwertigen Metallionen, insbesondere die zweiwertigen Kationen und/oder die zweiwertigen Metallionenen, vorzugsweise die Erdalkalimetallionen, bevorzugt die Calciumionen und/oder die Magnesiumionen, in Mengen im Bereich von 0,001 mmol/l bis 100 mmol/l, insbesondere im Bereich von 0,01 mmol/l bis 75 mmol/l, vorzugsweise im Bereich von 0,1 mmol/l bis 50 mmol/l, bevorzugt im Bereich von 0,2 mmol/l bis 40 mmol/l, besonders bevorzugt im Bereich von 0,5 mmol/l bis 30 mmol/l, ganz besonders bevorzugt im Bereich von 1 mmol/l bis 20 mmol/l, berechnet als mehrwertige(s) Kation(en) oder mehrwertige(s) Metallion(en) und bezogen auf die Zusammensetzung, enthält.

Durch die Verwendung der vorgenannten Kationen bzw. Salze kann insbesondere die Kompatibilität gegenüber der mit dem Biopolymer auszurüstenden Atemschutzmaske bzw. dem Filterelement verbessert werden, und zwar auch was die Kompatibilität bzw. Haftung und somit die Beständigkeit der Ausrüstung mit dem antimikrobiellen Biopolymer anbelangt. Zudem geht das Vorhandensein entsprechender zweiwertiger Kationen mit dem Vorteil einher, dass es zur Herstellung der Zusammensetzung nicht erforderlich ist, auf demineralisiertes bzw. entionisiertes Wasser als Dispersionsmedium zurückzugreifen.

Ohne sich auf diese Theorie beschränken zu wollen, können die zweiwertigen Kationen zu Vernetzungen bzw. Molekülinteraktionen führen, und zwar innerhalb der aufgebrachten Zusammensetzung selbst als auch an den resultierenden Grenzflächen, insbesondere im Bereich der Oberfläche als auch der Grenzfläche zu dem Textilmaterial bzw. den diesbezüglichen Garnen bzw. Fasern. Hierdurch wird auch die Gleichmäßigkeit und Beständigkeit bzw. Dauerhaftigkeit der antimikrobiellen Ausrüstung erhöht.

Die vorliegend beschriebene Zusammensetzung kann im Allgemeinen viskos oder gelförmig ausgebildet sein. Hierbei können die Anwendungseigenschaften gezielt eingestellt werden, beispielsweise im Hinblick auf das Auftragen der Zusammensetzung auf einen entsprechend auszurüstenden Gegenstand. Insbesondere kann die Zusammensetzung flüssig bzw. gering viskos ausgebildet sein. Die Einstellung der Viskosität kann z.B. durch Zugabe von Alginaten erfolgen.

Im Allgemeinen kann die Zusammensetzung in Form einer Zusammensetzung zum Auftragen bzw. Einarbeiten bzw. Inkorporieren des antimikrobiellen Biopolymers insbesondere als Spray, Reinigungs- und/oder Waschmittelzusammensetzung und/oder Imprägnierungszusammensetzung, ausgebildet sein. Grundsätzlich kann die Zusammensetzung auch als Creme oder Salbe ausgebildet sein.

Vorliegend beschrieben ist auch eine Zusammensetzung, insbesondere wässrige Zusammensetzung, vorzugsweise in Form einer Lösung oder Dispersion, bevorzugt in Form einer wässrig ausgebildeten und/oder insbesondere wässrig basierten Lösung oder Dispersion, insbesondere wie zuvor definiert, vorzugsweise zur Ausrüstung bzw. zum Erhalt einer Atemschutzmaske, insbesondere wie zuvor definiert, und/oder vorzugsweise eines textilen Flächengebildes (textilen Flächenmaterials), insbesondere als Bestandteil oder in Form einer Atemschutzmaske, insbesondere wie zuvor definiert, und/oder eines Filterelements, insbesondere eines textilen Filterelements, vorzugsweise in Form eines textilen Flächengebildes (textiles Flächenmaterial), insbesondere wie zuvor definiert, mit mindestens einem antimikrobiellen Biopolymer, und/oder mit antimikrobiellen Eigenschaften.

Beispielhafte Zusammensetzungen können insbesondere jeweils (i) Chitosan, Ascorbinsäure, Resveratrol, Lecithin, Glycerin und Wasser; (ii) Chitosan, Chondroitinsulfat, Natrium-Alginate, Milchsäure, Glycerin und Wasser; (iii) Chitosan, Ascorbinsäure, Salicylsäure, Glycerin und Wasser; (iv) Chitosan, Keratin-Hydrolysat, Cystein, Resveratrol, Molkeprotein, Milchsäure, Lecithin, Glycerin und Wasser; enthalten. Weitere Zusammensetzungen können beispielsweise (vi) Chitosan, Ascorbinsäure, Resveratrol, Lecithin, Glycerin, Alkylpolyglucosid, Milchsäure und Wasser; sowie (vii) Chitosan, Ascorbinsäure, Cystus, Milchsäure, Lecithin, Cocamidopropylbetain, Alkylpolyglucosid und Wasser; enthalten.

Weitere beispielhafte Zusammensetzungen können Chitosan und Additive bzw. Komplexbildner, ausgewählt aus der Gruppe von Mandelsäure, Salicylsäure, Ascorbinsäure und Milchsäure sowie deren Kombinationen oder Mischungen, und Wasser als Trägermedium aufweisen oder hieraus bestehen.

Auch die vorgenannten weiteren Zusammensetzungen gemäß dem vorliegenden Aspekt können jeweils zudem (insbesondere als weitere Komponente bzw. als Komponente (d) oder (e)) mehrwertige Kationen und/oder mehrwertige Metallionen, insbesondere zweiwertige Kationen und/oder zweiwertige Metallionen, vorzugsweise Erdalkalimetallionen, bevorzugt Calciumionen und/oder Magnesiumionen, insbesondere wie zuvor definiert, enthalten.

Vorliegend wird somit insgesamt eine leistungsfähige Zusammensetzung bereitgestellt, welche ein spezielles antimikrobielles Biopolymer als Wirksubstanz bzw. Wirkstoff enthält. Dabei zeichnen sich die erfindungsgemäßen Zusammensetzungen durch eine hohe Lagerstabilität und hervorragenden Anwendungseigenschaften im Hinblick auf die Ausrüstung von Gegenständen, wie Atemschutzmasken und Filterelementen oder dergleichen, mit antimikrobiellen Eigenschaften auf Basis des Biopolymers aus.

Für weitergehende Einzelheiten zu der vorliegend beschriebenen Zusammensetzung kann auf die Ausführungen zu den übrigen Aspekten verwiesen werden, welche in Bezug auf die vorliegend beschriebene Zusammensetzung entsprechend gelten.

Vorliegend ist gleichermaßen beschrieben die Verwendung der beschriebenen Zusammensetzung, insbesondere wässrige Zusammensetzung, vorzugsweise in Form einer Lösung oder Dispersion, bevorzugt in Form einer wässrig ausgebildeten und/oder insbesondere wässrig basierten Lösung oder Dispersion, wie zuvor definiert, zur Ausrüstung bzw. zum Erhalt einer Atemschutzmaske, insbesondere wie zuvor definiert, und/oder vorzugsweise eines textilen Flächengebildes (textilen Flächenmaterials), insbesondere als Bestandteil oder in Form einer Atemschutzmaske, insbesondere wie zuvor definiert, und/oder eines Filterelements, insbesondere eines textilen Filterelements, vorzugsweise in Form eines textilen Flächengebildes (textiles Flächenmaterial), insbesondere wie zuvor definiert, mit mindestens einem antimikrobiellen Biopolymer und/oder mit antimikrobiellen Eigenschaften.

Für diesbezüglich weitere Einzelheiten zu der vorliegend beschriebenen Verwendung kann auf die weiteren Aspekte verwiesen werden, wobei die diesbezüglichen Ausführungen entsprechend gelten.

Zudem betrifft die vorliegende Erfindung gemäß einem **weiteren** Aspekt der vorliegenden Erfindung auch das erfindungsgemäße Verfahren zur Ausrüstung bzw. zum Erhalt eines textilen Flächengebildes (textilen Flächenmaterials) als Bestandteil einer Atemschutzmaske, wie zuvor definiert, mit mindestens einem antimikrobiellen Biopolymer, ausgewählt aus Chitosan und/oder dessen Derivat oder Salz,
wobei das antimikrobielle Biopolymer ein gewichtsmittleres Molekulargewicht M_{w} im Bereich von 1.500 Da bis 9.499 Da aufweist und wobei das antimikrobielle Biopolymer einen Acetylierungsgrad von mindestens 5 %, bezogen auf die acetylierbaren funktionellen Gruppen des Biopolymers, aufweist,
wobei das antimikrobielle Biopolymer auf das textile Flächengebilde aufgebracht und/oder aufgetragen wird,
wobei das antimikrobielle Biopolymer in einer Menge im Bereich von 0,001 Gew.-% bis 20 Gew.-%, bezogen auf das textile Flächengebilde, auf das textile Flächengebilde aufgebracht und/oder aufgetragen wird und/oder wobei das antimikrobielle Biopolymer in einer Menge im Bereich von 0,1 g/m² bis 200 g/m², bezogen auf das textile Flächengebilde, auf das textile Flächengebilde aufgebracht und/oder aufgetragen wird,
wobei das textile Flächengebilde in Kontakt mit einer Zusammensetzung gebracht wird,
wobei die Zusammensetzung die folgenden Inhaltsstoffe enthält:
   (a) mindestens ein wie zuvor definiertes antimikrobielles Biopolymer,
   (b) mindestens ein Additiv,
      wobei das Additiv ausgewählt ist aus der Gruppe von Mandelsäure, Salicylsäure, Ascorbinsäure und Milchsäure; und
   (c) mindestens ein Trägermedium;
wobei nachfolgend das Trägermedium der Zusammensetzung entfernt wird.

In diesem Zusammenhang kann auch auf die Ausführungen zu den weiteren Aspekten verwiesen werden, wobei die diesbezüglichen Ausführungen entsprechend gelten.

Im Rahmen der vorliegenden Erfindung kann die Ausrüstung eines zugrundeliegenden Gegenstands in Form eines textilen Flächengebildes einer Atemschutzmaske, wie zuvor definiert, mit dem antimikrobiellen beispielsweise nachträglich (d. h. insbesondere in Bezug auf den bereits hergestellten Gegenstand als solchen; beispielsweise durch Aufsprühen der Zusammensetzung auf den auszurüstenden Gegenstand) oder aber vorab (d. h. insbesondere in Bezug auf Ausgangsmaterialien, wie z. B. Fasern, Fäden oder Garne bzw. Textilbestandteile des Gegenstands; beispielsweise durch Einarbeitung oder Aufsprühen der Zusammensetzung in bzw. auf die Fäden oder Garne bzw. Textilmaterialien) erfolgen.

Weiterhin ist vorliegend beschrieben auch die Verwendung mindestens eines antimikrobiellen Biopolymers, wie zuvor definiert, oder der vorliegend beschriebenen Zusammensetzung, wie zuvor definiert,
zur Ausrüstung und/oder zum Erhalt von Textilmaterialien, Textilien und/oder textilen Erzeugnissen, vorzugsweise in Form von (Schutz-)Bekleidung, insbesondere für den medizinischen und/oder pflegerischen Versorgungsbereich, wie für den Krankenhaus-, Pflege- und/oder Sanitätsbereich und/oder wie für den ärztlichen Bereich, mit antimikrobiellen Eigenschaften; bzw.
zum Imprägnieren von Textilmaterialien, Textilien und/oder textilen Erzeugnissen, vorzugsweise in Form von (Schutz-)Bekleidung, insbesondere für den medizinischen und/oder pflegerischen Versorgungsbereich, wie für den Krankenhaus-, Pflege- und/oder Sanitätsbereich und/oder wie für den ärztlichen Bereich; bzw.
zur Ausrüstung und/oder zum Erhalt von Textilmaterialien, Textilien und/oder textilen Erzeugnissen, vorzugsweise in Form von (Schutz-)Bekleidung, insbesondere für den medizinischen und/oder pflegerischen Versorgungsbereich, wie für den Krankenhaus-, Pflege- und/oder Sanitätsbereich und/oder wie für den ärztlichen Bereich, mit feuchtigkeits- und/oder schmutzabweisenden Eigenschaften; bzw.
zur Bereitstellung eines Lotuseffekts (Selbstreinigungseigenschaften) bei Textilmaterialien, Textilien und/oder textilen Erzeugnissen, vorzugsweise in Form von (Schutz-)Bekleidung, insbesondere für den medizinischen und/oder pflegerischen Versorgungsbereich, wie für den Krankenhaus-, Pflege- und/oder Sanitätsbereich und/oder wie für den ärztlichen Bereich; bzw.
als Imprägnier- und/oder Schmutzschutzmittel und/oder als Imprägnier- und/oder Schmutzschutzzusammensetzung für Textilmaterialien, Textilien und/oder textilen Erzeugnissen, vorzugsweise in Form von (Schutz-) Bekleidung, insbesondere für den medizinischen und/oder pflegerischen Versorgungsbereich, wie für den Krankenhaus-, Pflege- und/oder Sanitätsbereich und/oder wie für den ärztlichen Bereich; bzw.
zur Glättung und/oder Verringerung der Rauheit, insbesondere Oberflächenrauheit, und/oder zur Verbessereung der haptischen Eigenschaften von Textilmaterialien, Textilien und/oder textilen Erzeugnissen, vorzugsweise in Form von (Schutz-) Bekleidung, insbesondere für den medizinischen und/oder pflegerischen Versorgungsbereich, wie für den Krankenhaus-, Pflege- und/oder Sanitätsbereich und/oder für den ärztlichen Bereich, insbesondere zur Glättung und/oder Verringerung der Rauheit, insbesondere Oberflächenrauheit, von den Textilmaterialien, Textilien und/oder textilen Erzeugnissen zugrundeliegenden Garnen, Fäden, Fasern oder dergleichen.

Auf Basis der erfindungsgemäßen Verwendungen, wie zuvor angeführt, können die in Rede stehenden Materialien somit gezielt mit speziellen Eigenschaften ausgestattet werden, auf deren Basis die Anwendungs- bzw. Einsatzeigenschaften verbessert werden können. Bei den Materialien kann es sich beispielsweise und in nichtbeschränkender Weise um Bekleidung insbesondere in Form von Unter- oder Oberbekleidung, wie Hemden, Hosen, Jacken, Pullover, Kittel oder dergleichen, handeln, wobei die Bekleidung sich aufgrund ihrer verbesserten Eigenschaften im besonderen Maße für die obigen Einsatzbereiche eignet. Gleichermaßen kann es sich bei den Materialien auch um entsprechende Ausgangsmaterialien zur Textilherstellung, wie Garne, Fäden, Fasern oder dergleichen, handeln. Grundsätzlich kann es sich bei den Materialien auch um Leder oder Kunstleder bzw. leder- oder kunstlederbasierte Textilien handeln.

Aufgrund ihrer verbesserten Eigenschaften weisen die in Rede stehenden Materialien insbesondere verlängerte Einsatzzeiten auf bzw. bieten die Möglichkeit einer längeren Tragezeit, wobei der Träger insbesondere besser gegenüber Kontamination oder Verschmutzung geschützt ist. Zudem können durch die (Oberflächen-)Glättung der Materialien die haptischen Eigenschaften bzw. der Tragekomfort verbessert werden. Zudem geht die (Oberflächen-)Glättung nicht zuletzt auch bei etwaig geschädigten Fasern oder dergleichen mit einem geringeren Verschleiß bei mechanischer Beanspruchung (beispielsweise beim Reinigen bzw. Waschen) einher, so dass auch von daher die Freisetzung von Mikropartikeln, insbesondere Mikroplastik im Fall von Kunstgarnen bzw. Kunstfasern, vermieden bzw. verringert werden kann.

Vorliegend beschrieben sind in diesem Lichte darüber hinaus auch Textilmaterialien, Textilien und/oder textilen Erzeugnissen, vorzugsweise in Form von (Schutz-) Bekleidung, insbesondere für den medizinischen und/oder pflegerischen Versorgungsbereich, wie für den Krankenhaus-, Pflege- und/oder Sanitätsbereich und/oder wie für den ärztlichen Bereich, wobei die Textilmaterialien, Textilien und/oder textilen Erzeugnissen mit mindestens einem antimikrobiellen Biopolymer, wie zuvor definiert, ausgerüstet sind. In diesem Zusammenhang kann die Ausrüstung insbesondere mit der zuvor definierten Zusammensetzung nach der Erfindung erfolgt sein.

Hinsichtlich des vorliegenden Aspekts insbesondere mit der Ausrüstung der Materialien mit dem Biopolymer bzw. der Zusammensetzung kann insbesondere auch auf die Ausführungen zu dem vorangehenden Aspekt sowie auf die weiteren Aspekte verwiesen werden.

Darüber hinaus ist vorliegend beschrieben auch die Verwendung mindestens eines antimikrobiellen Biopolymers, wie zuvor definiert, oder einer Zusammensetzung, wie zuvor definiert, im Bereich der Kosmetik oder Medizin, insbesondere im Bereich der Mundpflege.

In diesem Zusammenhang ist vorliegend beschrieben insbesondere die Verwendung mindestens eines antimikrobiellen Biopolymers, wie zuvor definiert, oder einer Zusammensetzung, wie zuvor definiert, als oder in Lebensmittelzusammensetzungen, kosmetische(n) Zusammensetzungen oder pharmazeutische(n) Zusammensetzungen und/oder im Bereich der Lebensmittelzusammensetzungen, kosmetischen Zusammensetzungen oder pharmazeutischen Zusammensetzungen. Beispielsweise können diesbezügliche Verwendungen des antimikrobiellen Biopolymers bzw. der erfindungsgemäßen Zusammensetzungen als kosmetische Grundlagen, UV-Schutzmittel, Konservierungsmittel, zur Verkapselung von insbesondere oxidationsempfindlichen Wirkstoffen, pharmazeutische Grundlage, Pflanzenschutzmittel, Anti-Moos-Mittel, Nahrungsergänzungsmittel, Staubexplosionsschutzmittel oder dergleichen in Betracht kommen. Hinsichtlich vorliegender Ausgestaltungen der diesem Aspekt zugrundeliegenden Zusammensetzungen kann auch auf die obigen Ausführungen zu der vorliegend beschriebenen Zusammensetzung verwiesen werden, welche entsprechend gelten.

In diesem Zusammenhang können entsprechende Produkte, wie kosmetische oder medizinische Zusammensetzungen, mit antimikrobiellen Eigenschaften ausgerüstet werden. Derartige Produkte und/oder die insbesondere hierfür eingesetzten Zusammensetzungen nach der Erfindung können beispielsweise als Creme, Salbe, Paste, Sprayzusammensetzung (insbesondere als Mundspray) oder dergleichen ausgebildet sein und/oder vorliegen.

In diesem Zusammenhang besteht auch die Möglichkeit, weitere Substanzen bzw. Wirkstoffe mit einer erhöhten (Bio-)Verfügbarkeit auszustatten. Beispielsweise ist es im Rahmen der vorliegenden Erfindung möglich, weitere Wirkstoffe bzw. Substanzen biologisch verfügbar bereitzustellen bzw. zu stabilisieren, welche ansonsten aufgrund ihrer Instabilität in wässrigen Systemen nicht ohne Weiteres bereitgestellt werden können. So kann beispielsweise eine effiziente Stabilisierung bzw. Verkapselung von Retinol oder dergleichen erfolgen. Folglich können die vorliegend beschriebenen Zusammensetzungen insbesondere im Hinblick auf den vorliegenden beschriebenen Aspekt Retinol aufweisen.

Wie zuvor angeführt, können die vorliegend beschriebenen Zusammensetzungen beispielsweise Öle, insbesondere kosmetische bzw. pharmazeutische Öle, enthalten. In diesem Zusammenhang können derartige Komponenten mit hoher Homogenität in die erfindungsgemäße Zusammensetzung eingearbeitet werden. Beispielsweise können die diesbezüglichen Zusammensetzungen Schwarzkümmelöl oder dergleichen aufweisen.

In diesem Zusammenhang ist vorliegend beschrieben auch ein Verfahren zur Herstellung einer insbesondere homogen ausgebildeten Zusammensetzung, insbesondere wässrigen Zusammensetzung, vorzugsweise in Form einer Lösung oder Dispersion, bevorzugt in Form einer wässrig ausgebildeten und/oder insbesondere wässrig basierten Lösung oder Dispersion, insbesondere wie zuvor definiert, wobei das Verfahren die nachfolgenden Schritte umfasst:
(a) Herstellung einer Vormischung A, umfassend mindestens ein antimikrobiellen Biopolymer, wie zuvor definiert, und mindestens ein Additiv, insbesondere mindestens eines Additiv zur Verbesserung der Verteilung und/oder Homogenisierung des Biopolymers, wie zuvor definiert, insbesondere wobei die Vormischung bei einer Temperatur im Bereich von 5 °C bis 50 °C hergestellt wird;
(b) Herstellung einer Vormischung B, umfassend mindestens ein Trägermedium, insbesondere mindestens ein bei Raumtemperatur (20°C) und Umgebungsdruck (1.013,25 hPa) flüssiges Trägermedium, vorzugsweise in Form eines Lösemittels oder Dispersionsmediums, vorzugsweise Wasser, und gegebenenfalls mindestens ein Additiv, wie zuvor definiert;
(c) Herstellung und/oder Bereitstellung einer Ölphase C, umfassend mindestens ein zumindest im Wesentlichen nicht wasserlösliches Öl, insbesondere kosmetisches und/oder pharmazeutisches Öl;
(d) Zusammenführen der Vormischung A und der Vormischung B insbesondere unter Energieeintrag, vorzugsweise unter Rühren;
(e) Zusammenführen der Ölphase C zu der in Verfahrensschritt (d) erhaltenen Mischung aus Vormischung A und Vormischung B, insbesondere unter Energieeintrag, vorzugsweise unter Homogenisieren.

Auf Basis des vorgenannten Verfahrens können dabei homogene und (lager-)stabile Zusammensetzungen erhalten werden. Die diesbezüglich erhaltene Zusammensetzung unter Verwendung mindestens eines Öls, wie zuvor angeführt, liegt dabei insbesondere als Emulsion vor, insbesondere mit einer Tröpfchengröße des emulgierten Öls im Bereich von 100 nm bis 5 µm (insbesondere gemessen mittels dynamischer Lichtstreuung). Beispielsweise kann im Hinblick auf das vorgenannte Verfahren das Gewichtsverhältnis aus Additiv und Chitosan im Bereich von 1 bis 5 liegen. Insbesondere kann in Verfahrensschritt (a) zur Herstellung der Vormischung A Glycerin eingesetzt werden. Folglich kann die in Verfahrensschritt (a) erhaltene Vormischung Glycerin aufweisen.

Für weitere Einzelheiten zu diesem Aspekt kann auf die Ausführungen zu den weiteren Aspekten verwiesen werden, welche entsprechend gelten.

Weitere Ausgestaltungen, Abwandlungen und Variationen sowie Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die folgenden Ausführungsbeispiele dienen lediglich der Veranschaulichung der vorliegenden Erfindung, ohne die vorliegende Erfindung jedoch hierauf zu beschränken.

### AUSFÜHRUNGSBEISPIELE:

Die nachfolgenden Ausführungsbeispiele verdeutlichen die Vorteile und speziellen Eigenschaften und Besonderheiten, wie sie mit der erfindungsgemäßen Konzeption einhergehen.

Dabei ist auch hervorzuheben, dass Chitosan als solches in seiner Stoffform zumeist körnig oder in Form von Schuppen vorliegt und in Bezug auf den Stand der Technik nur unzureichend in einem insbesondere wässrigen Trägersystem eingebracht bzw. stabilisiert werden kann. Wässrige Chitosanmischungen ohne weiterführende Stabilisierung bzw. des Standes der Technik zeigen bei der Lagerung bei Raumtemperatur oftmals schon nach kurzer Zeit eine Farbverschiebung nach gelb, die sich im weiteren Verlauf zu dunkelbraun verändern kann, wobei es nachfolgend oder einhergehen zusätzlich noch zu einer Flokkulation kommen kann. Demgegenüber weisen die erfindungsgemäßen Zusammensetzungen eine verbesserte Stabilität bzw. eine bessere Einarbeitung des Chitosans auf.

Die vorteilhaften Eigenschaften der erfindungsgemäßen Chitosan-Lösungen können insbesondere auch anhand der UV-Absorption wässriger Lösungen gezeigt werden. Vorteilhaft in die Zusammensetzung eingebrachtes bzw. komplexiertes Chitosan zeigt in UV-Vis-Spektren eine charakteristische Absorption. Nicht aktiviertes Chitosan in Lösung zeigt demgegenüber eine charakteristische Bande bei ca. 200 nm.

Im Hinblick auf die nachfolgenden Zusammensetzungen wird als Biopolymer ein Chitosan mit einem gewichtsmittleren Molekulargewicht M_{W} von etwa 8.000 Da bzw. einem zahlenmittlerem Molekulargewicht Mₙ von etwa 8.480 Da (d.h. mit einem Polydispersitätsindex (PDI), berechnet als Quotient aus gewichtsmittlerem Molekulargewicht M_{w} und zahlenmittlerem Molekulargewicht Mₙ, von etwa 1,06).

Nachfolgend sind alle erfindungsgemäßen Ausführungsformen mit dem Symbol "*" gekennzeichnet.

### 1. Herstellungsbeispiele / Beispielrezepturen / Anwendung an Atemschutzmasken

Die nachfolgend beispielhaft angeführten Zusammensetzungen nach der Erfindung können durch Zusammenfügen bzw. Einmischen der Komponenten in das Trägermedium in Form von Wasser erhalten werden. Das Chitosan kann in diesem Zusammenhang auch vordispergiert werden, beispielsweise in dem eingesetzten Additiv, wie Glycerin, insbesondere gemeinsam mit einer Säurekomponente des Additivs, wie Salicylsäure.

| **Zusammensetzung** | **A1*** | **A2*** | **A3*** | **A4*** | **A5*** | **A6*** |
|---|---|---|---|---|---|---|
| | Gew.-% | Gew.-% | Gew.-% | Gew.-% | Gew.-% | Gew.-% |
| Chitosan | 4 | 3 | 3 | 5 | 4 | 3 |
| Ascorbinsäure | 4 | 3 | | 1 | | |
| Salicylsäure | | | | 4 | | |
| Keratin-Hydrolysat | | | | | 2 | |
| Cystein | | | | | 1 | |
| Resveratrol | | 0,5 | | | 0,7 | |
| Chondroitinsulfat | | | 2 | | | 1,5 |
| Natrium-Alginate | | | 1 | | | 1 |
| Pektin | | | | | | 1 |
| Molkeprotein | | | | | 1 | |
| Milchsäure | | | 0,3 | | 0,5 | 0,2 |
| Lecithin | | 1 | | | 1 | |
| Glycerin | | 20 | 10 | 15 | 25 | |
| Wasser | 92 | 72,5 | 83,7 | 75 | 64,8 | 93,3 |
| | | | | | | |
| Gesamt | 100 | 100 | 100 | 100 | 100 | 100 |

| **Zusammensetzung** | **A7*** |
|---|---|
| | Gew.-% |
| Chitosan | 3 |
| Ascorbinsäure | 3 |
| Resveratrol | 0,5 |
| Lecithin | 1 |
| Glycerin | 20 |
| Alkylpoly Glucosid 818 | 15 |
| Milchsäure | 1,7 |
| Wasser | 55,8 |
| | |
| Gesamt | 100 |

| **Zusammensetzung** | **A8*** |
|---|---|
| | Gew.-% |
| Chitosan | 4 |
| Ascorbinsäure | 2 |
| Cystus | 1 |
| Milchsäure | 2 |
| Lecithin | 2 |
| Cocamidopropylbetaine | 5 |
| Alkylpoly Glucosid 818 | 10 |
| Wasser | 74 |
| | |
| Gesamt | 100 |

Die Zusammensetzungen weisen eine hohe (Lager-)Stabilität und eine antimikrobielle Wirksamkeit auf. Insbesondere ermöglichen die erfindungsgemäßen Zusammensetzungen eine stabile und homogene sowie dauerhafte Inkorporation des antimikrobiellen Biopolymers, und zwar auch bei Temperaturen bis zu 40 °C.

Weiterhin werden erfindungsgemäße Atemschutzmasken, welche in Form von Mund-Nasen-Schutzmasken (MNS) vorliegen bzw. hergestellt werden, mit den vorliegenden Zusammensetzungen nach der Erfindung behandelt, und zwar zum einen durch beidseitges Aufsprühen und zum anderen durch einseitiges Aufsprühen auf die jeweiligen textilen Flächengebilde der Atemschutzmasken, wobei anschließend eine Trocknung mit der Entfernung des Trägermediums in Form von Wasser erfolgt. Zudem werden Atemschutzmasken bereitgestellt, bei denen die Fasern als solche von für die erfindungsgemäßen Atemschutzmasken eingesetzten textilen Flächengebilden mit den erfindungsgemäßen Zusammensetzungen behandelt werden, und zwar mit nachfolgender Entfernung des Trägermaterials. Auf dieser Basis werden entsprechende Atemschutzmasken bereitgestellt. Die Atemschutzmasken weisen antimikrobielle Eigenschaften bei hoher Beständigkeit auch der antimikrobiellen Ausrüstung auf.

### 2. weitere Zusammensetzungen / Untersuchungen

(i) Zudem werden folgende Zusammensetzungen hergestellt und hinsichtlich ihrer jeweiligen Stabilität Zur Bestimmung der Stabilität anhand von UV-Spektren untersucht:

| **Zusammensetzung** | **A9*** | **A10*** | **A11*** | **A12*** |
|---|---|---|---|---|
| | Gew.-% | Gew.-% | Gew.-% | Gew.-% |
| Lecithin | 9,8 | 10,1 | 8,6 | 10 |
| Salicylsäure | 4,1 | 1 | 0 | 0 |
| Mandelsäure | 0 | 0 | 2,3 | 0 |
| Milchsäure | 0 | 0 | 0 | 0,6 |
| Chitosan | 4,1 | 5,9 | 5,9 | 6,5 |
| Wasser | 82 | 83 | 83,3 | 82,9 |
| | | | | |
| Gesamt | 100 | 100 | 100 | 100 |

Die Zusammensetzungen sind gelförmig und lassen den Schluss zu, dass das Chitosan effektiv gelöst wird. Wird das eingesetzte molekulare Verhältnis von Chitosan zu eingesetzten Additiven in Form der Säuren in Relation gesetzt, so ergibt sich folgende Abhängigkeit (mit R² = 0,96):

| **Absorption** | **Verhältnis Chitosan/Säurekomponente** |
|---|---|
| 0,8 | 0,86 |
| 0,25 | 0,41 |
| 0,2 | 0,21 |
| 0,03 | 0,16 |

Insbesondere kann die Aktivität des Chitosan durch gezielte Einstellung der Menge der Additive insbesondere im Verhältnis zu der Menge an Chitosan vorgegeben bzw. beeinflusst werden.
(ii) Weiterhin werden die antimikrobiellen Eigenschaften der folgenden Zusammensetzungen mittels eines Challenge-Tests untersucht:

| **Zusammensetzung** | **A13*** | **A14*** |
|---|---|---|
| | Gew.-% | Gew.-% |
| Sorbitan Caprylat | 0,5 | 0,5 |
| Lecithin | 0,5 | 0,5 |
| Chitosan | 1 | 1 |
| Mandelsäure | 1 | |
| Ascorbinsäure | | 1 |
| Wasser | 97 | 97 |
| | | |
| Gesamt | 100 | 100 |

| **Zusammensetzung** | **A15** |
|---|---|
| | Gew.-% |
| Keratinhydrolysat | 3 |
| Chitosan | 1 |
| Wasser | 96 |
| | |
| Gesamt | 100 |

Die Prüfparameter werden gemäß Ph. Eur. 5.1.3 durchgeführt. Als Testkeime werden *Pseudomonas aeruginosa* (ATCC 9027): mindestens 100.000 bis höchstens 1.000.000 KBE/g 340.000 KBE/g, *Staphylococcus aureus* (ATCC 6538): mindestens 100.000 bis höchstens 1.000.000 KBE/g 170.000 KBE/g, *Candida albicans* (ATCC 10231): mindestens 100.000 bis höchstens 1.000.000 KBE/g 570.000 KBE/g und *Aspergillus brasiliensis* (ATCC 16404): mindestens 100.000 bis höchstens 1.000.000 KBE/g 340.000 KBE/g eingesetzt.

Im Keimbelastungstest erfüllten die Zusammensetzungen das A-Kriterium.

Kombinationen auf Basis von Chitosan mit Mandelsäure, Salicylsäure, Ascorbinsäure oder Milchsäure weisen besonders gute Eigenschaften auf, wobei die antimikrobielle Wirkung bei den vorliegenden Verhältnissen von Additiv bzw. Komplexbildner zu Chitosan besonders gut ist. Weiterhin werden besonders gute Ergebnisse erhalten, wenn pro Monomereinheit Glucosamin im Chitosan von 0,6 bis 1,25 Einheiten Mandelsäure, Salicylsäure, Ascorbinsäure oder Milchsäure vorliegen. Auch erfindungsgemäße Chitosan-Zusammensetzungen mit Proteinhydrolysat, wie z.B. Keratinhydrolysat oder Molke, bestehen den Keimbelastungstest, wie zuvor angeführt.
(iii) Die erfindungsgemäßen Chitosan-Zusammensetzungen lassen sich zudem flexibel in ihrer Viskosität einstellen. Beispielsweise lässt sich die Viskosität über den Zusatz von Alginaten einstellen. Die aus den erfindungsgemäßen Zusammensetzungen bzw. Lösungen gebildeten Beschichtungen bzw. Filme zeigen eine deutlich bessere Festigkeit auf, und zwar ohne an Elastizität zu verlieren. Der synergistische Effekt der Viskositätsbildung kann auch in der Viskositätsregulierung und Stabilisierung von Emulsionen genutzt werden. Diese Eigenschaften sind besonders von Interesse, da zur Viskositätsregulierung im Allgemeinen vorwiegend Polyacrylsäurederivate eingesetzt werden, die Mikroplastik in die Umwelt freisetzen. Eine erfindungsgemäße Zusammensetzung bzw. Rezeptur ergibt sich beispielsweise wie folgt:

| **Zusammensetzung** | **A16*** |
|---|---|
| | Gew.-% |
| Chitosan | 0,64 |
| Keratin | 0,64 |
| Na-Alginate | 0,4 |
| Salicylsäure | 0,46 |
| Wasser | 97,86 |
| | |
| Gesamt | 100 |

(vi) Die erfindungsgemäßen Zusammensetzungen können beispielsweise auch in Form von Emulsionen bereitgestellt werden. Eine mögliche Art der Herstellung kann beispielsweise darin bestehen, dass folgende Rezepturen:

| **Zusammensetzung** | **A17*** | **A18*** |
|---|---|---|
| **Phase A** | Gew.-% | Gew.-% |
| Glycerin | 10 | 0 |
| Chitosan | 2 | 2 |
| Mandelsäure | 2 | 0 |
| Ascorbinsäure | 0 | 2 |

| **Phase B** | | 1 |
|---|---|---|
| Molke | 0 | 10 |
| Keratinhydrolysat | 5 | 0 |
| Wasser | 10 | 20 |

| **Phase C** | | |
|---|---|---|
| Wasser | 41 | 36 |
| | | |

| **Phase D** | | |
|---|---|---|
| Capric Caprylic Triglycerid | 30 | 30 |
| | | |
| Gesamt | 100 | 100 |
| | | |
| Partikelgröße median (µ) | 2,8 | 2,3 |
| Varianz ± (µ) | 1,8 | 1,4 |

jeweils in einem Verfahren verarbeitet werden, bei welchem Phase A homogen vermischt wird; Phase A unter Rühren in Phase B gegeben wird, bis ein homogenes Gel entstanden ist; Phase C unter Rühren in Phase A/B gegeben und anschließend Phase D unter Rühren in Phase A/B/C geben und diese dann homogenisiert wird, bis eine homogene Emulsion entstanden ist. Es ergeben sich auch unter Einsatz nur geringer Scherkräfte langzeitstabile Emulsionen, welche insbesondere auch eine monomodale Tröpfchengrößenverteilung aufweisen können.

Es können auch Emulsionen hergestellt werden, welche in der Ölphase amphiphile Öle enthalten, die ein antimikrobielles Spektrum bzw. diesbezügliche Eigenschaften aufweisen:

| **Zusammensetzung** | **A19*** |
|---|---|
| **Phase A** | Gew.-% |
| Sorbitan Caprylat | 5 |
| Lecithin | 5 |
| Chitosan | 2 |
| Mandelsäure | 2 |

| **Phase B** | |
|---|---|
| Wasser | 56 |

| **Phase C** | |
|---|---|
| Schwarzkümmelöl | 30 |
| | |
| Gesamt | 100 |
| | |
| Partikelgröße median (µ) | 1,9 |
| Varianz ± (µ) | 1,4 |

Durch Zusätze nichtionogener Emulgatoren können des Weiteren erfindungsgemäße Zusammensetzungen in Form von Mikroemulsionen insbesondere mit enger Partikelgrößenverteilung hergestellt werden. In der nachfolgenden Emulsion liegt beispielsweise Retinol stabil verkapselt vor:

| **Zusammensetzung** | **A20*** |
|---|---|
| **Phase A** | Gew.-% |
| Molke | 1,6 |
| Chitosan | 1,6 |
| Mandelsäure | 1,5 |
| Wasser | 61,9 |

| **Phase B** | |
|---|---|
| Retinol | 7,4 |
| Polysorbat 20 | 9 |
| Capric Caprylic Triglycerid | 17 |
| | |
| Gesamt | 100 |
| | |
| Partikelgröße median (µ) | 2,291 |
| Varianz ± (µ) | 0,07 |

Die Herstellung erfindungsgemäßer Zusammensetzungen in Form von Lösungen oder Emulsionen mit verkapselten Wirkstoffen kann beispielsweise dadurch erfolgen, dass Phase A solange gerührt wird bis sich ein Gel gebildet hat; Phase B auf 50°C erwärmt wird; Phase B unter Homogenisieren in Phase A geben wird und die Mischung solange homogenisiert wird, bis eine stabile Partikelgröße erreicht ist. Die Wirkstoffe liegen langzeitstabil auch bei höheren Temperaturbereichen in den erfindungsgemäßen Lösungen und Emulsionen vor.

Es können Emulsionen mit einem geringeren Anteil an verkapselten Wirkstoffen hergestellt werden. Diese Emulsionen können durch den Einsatz von Alginaten insbesondere auch eine höhere Viskosität gekennzeichnet sein:

| **Zusammensetzung** | **A21*** |
|---|---|
| **Phase A** | Gew.-% |
| Molke | 1,6 |
| Chitosan | 0,6 |
| Mandelsäure | 0,6 |
| Na Alginate | 0,2 |
| Wasser | 76,5 |

| **Phase B** | |
|---|---|
| Retinol | 0,5 |
| Polysorbat 20 | 3 |
| Capric Caprylic Triglyceride | 17 |
| | |
| Gesamt | 100 |
| | |
| Partikelgröße median (µ) | 0,428 |
| Varianz ± (µ) | 0,97 |

Im Hinblick auf die erfindungsgemäßen Zusammensetzungen können auch sogenannte Submicron-Emulsionen beispielsweise mit für den Lebensmittel- bzw. Kosmetikbereich zugelassenen Antioxidantien hergestellt werden. Die große Oberfläche der kleinen Partikel führt zu einer hohen Verfügbarkeit der Antioxidantien. Eine mögliche Rezeptur ergibt sich dabei wie folgt:

| **Zusammensetzung** | **A22*** |
|---|---|
| **Phase A** | Gew.-% |
| Molke | 1,6 |
| Chitosan | 1,6 |
| Ascorbinsäure | 1,5 |
| Wasser | 62,3 |

| **Phase B** | |
|---|---|
| Propylgallat | 2 |
| Butylhydroxytoluol | 10 |
| Butylhydroxyanisol | 10 |
| Polysorbat 20 | 4 |
| Capric Caprylic Triglyceride | 7 |
| | |
| Gesamt | 100 |
| | |
| Partikelgröße median (µ) | 0,378 |
| Varianz ± (µ) | 0,09 |

Die diesbezügliche Herstellung kann analog zu der zuvor beschriebenen Vorgehensweise erfolgen. Auf diese Weise kann eine Emulsion mit einer sehr kleinen und eng verteilten Tröpfchengröße bereitgestellt werden.

Insgesamt zeigen die Ausführungsbeispiele die mit der vorliegenden Erfindung einhergehenden Vorteile und Besonderheiten.

## Patentansprüche

1. Atemschutzmaske in Form einer vorzugsweise partikel- und/oder aerosolfiltrierenden Halbmaske und/oder eines vorzugsweise partikel- und/oder aerosolfiltrierenden Mund-Nasen-Schutzes, vorzugsweise zur Verhinderung der Übertragung von Krankheitserregern durch Tröpfcheninfektion oder vorzugsweise zur Verringerung der Keim- und Viruslast,
wobei die Atemschutzmaske mindestens ein luftdurchlässiges textiles Flächengebilde aufweist,
wobei das textile Flächengebilde mit mindestens einem antimikrobiellen Biopolymer, ausgewählt aus Chitosan und/oder dessen Derivat oder Salz, ausgerüstet ist, wobei das antimikrobielle Biopolymer ein gewichtsmittleres Molekulargewicht M_{w} im Bereich von 1.500 Da bis 9.499 Da aufweist und wobei das antimikrobielle Biopolymer einen Acetylierungsgrad von mindestens 5 %, bezogen auf die acetylierbaren funktionellen Gruppen des Biopolymers, aufweist,
wobei das antimikrobielle Biopolymer auf das textile Flächengebilde aufgebracht und/oder aufgetragen ist,
wobei das textile Flächengebilde das antimikrobielle Biopolymer in einer Menge im Bereich von 0,001 Gew.-% bis 20 Gew.-%, bezogen auf das textile Flächengebilde, enthält und/oder wobei das textile Flächengebilde das antimikrobielle Biopolymer in einer Menge im Bereich von 0,1 g/m² bis 200 g/m², bezogen auf das textile Flächengebilde, enthält, und
wobei das textile Flächengebilde mindestens ein Additiv aufweist und/oder hiermit ausgerüstet ist, wobei das Additiv ausgewählt ist aus der Gruppe von Mandelsäure, Salicylsäure, Ascorbinsäure und Milchsäure.

2. Atemschutzmaske nach Anspruch 1,
wobei das textile Flächengebilde das antimikrobielle Biopolymer in einer Menge von mindestens 0,005 Gew.-%, vorzugsweise mindestens 0,01 Gew.-%, bevorzugt mindestens 0,05 Gew.-%, besonders bevorzugt mindestens 0,1 Gew.-%, bezogen auf das textile Flächengebilde, enthält.

3. Atemschutzmaske nach Anspruch 1 oder 2,
wobei das textile Flächengebilde das antimikrobielle Biopolymer in einer Menge von höchstens 15 Gew.-%, vorzugsweise höchstens 10 Gew.-%, bevorzugt höchstens 5 Gew.-%, besonders bevorzugt höchstens 3 Gew.-%, bezogen auf das textile Flächengebilde, enthält.

4. Atemschutzmaske nach einem der vorangehenden Ansprüche,
wobei das textile Flächengebilde das antimikrobielle Biopolymer in einer Menge im Bereich von 0,005 Gew.-% bis 15 Gew.-%, vorzugsweise im Bereich von 0,01 Gew.-% bis 10 Gew.-%, bevorzugt im Bereich von 0,05 Gew.-% bis 5 Gew.-%, besonders bevorzugt im Bereich von 0,1 Gew.-% bis 3 Gew.-%, bezogen auf das textile Flächengebilde, enthält.

5. Atemschutzmaske nach einem der vorangehenden Ansprüche,
wobei das textile Flächengebilde das antimikrobielle Biopolymer in einer Menge von mindestens 0,2 g/m², vorzugsweise mindestens 0,5 g/m², bevorzugt mindestens 0,75 g/m², besonders bevorzugt mindestens 1 g/m², bezogen auf das textile Flächengebilde, enthält.

6. Atemschutzmaske nach einem der vorangehenden Ansprüche,
wobei das textile Flächengebilde das antimikrobielle Biopolymer in einer Menge von höchstens 100 g/m², vorzugsweise höchstens 50 g/m², bevorzugt höchstens 10 g/m², besonders bevorzugt höchstens 5 g/m², bezogen auf das textile Flächengebilde, enthält.

7. Atemschutzmaske nach einem der vorangehenden Ansprüche,
wobei das textile Flächengebilde das antimikrobielle Biopolymer in einer Menge im Bereich von 0,2 g/m² bis 100 g/m², vorzugsweise im Bereich von 0,5 g/m² bis 50 g/m², bevorzugt im Bereich von 0,75 g/m² bis 10 g/m², besonders bevorzugt im Bereich von 1 g/m² bis 5 g/m², bezogen auf das textile Flächengebilde, enthält.

8. Verfahren zur Ausrüstung und/oder zum Erhalt eines textilen Flächengebildes als Bestandteil einer Atemschutzmaske, wie in einem der Ansprüche 1 bis 7 definiert, mit mindestens einem antimikrobiellen Biopolymer, ausgewählt aus Chitosan und/oder dessen Derivat oder Salz,
wobei das antimikrobielle Biopolymer ein gewichtsmittleres Molekulargewicht M_{w} im Bereich von 1.500 Da bis 9.499 Da aufweist und wobei das antimikrobielle Biopolymer einen Acetylierungsgrad von mindestens 5 %, bezogen auf die acetylierbaren funktionellen Gruppen des Biopolymers, aufweist,
wobei das antimikrobielle Biopolymer auf das textile Flächengebilde aufgebracht und/oder aufgetragen wird,
wobei das antimikrobielle Biopolymer in einer Menge im Bereich von 0,001 Gew.-% bis 20 Gew.-%, bezogen auf das textile Flächengebilde, auf das textile Flächengebilde aufgebracht und/oder aufgetragen wird und/oder wobei das antimikrobielle Biopolymer in einer Menge im Bereich von 0,1 g/m² bis 200 g/m², bezogen auf das textile Flächengebilde, auf das textile Flächengebilde aufgebracht und/oder aufgetragen wird,
wobei das textile Flächengebilde in Kontakt mit einer Zusammensetzung gebracht wird,
wobei die Zusammensetzung die folgenden Inhaltsstoffe enthält:
(a) mindestens ein wie zuvor definiertes antimikrobielles Biopolymer,
(b) mindestens ein Additiv,
wobei das Additiv ausgewählt ist aus der Gruppe von Mandelsäure, Salicylsäure, Ascorbinsäure und Milchsäure; und
(c) mindestens ein Trägermedium;
wobei nachfolgend das Trägermedium der Zusammensetzung entfernt wird.

## Claims

1. Respiratory protection mask in the form of a preferably particle- and/or aerosol-filtering half mask and/or a preferably particle- and/or aerosol-filtering mouth-nose protection, preferably for preventing the transmission of pathogens by droplet infection or preferably for reducing the germ and virus load,
wherein the respiratory protection mask has at least one air-permeable textile fabric,
wherein the textile fabric is equipped with at least one antimicrobial biopolymer selected from chitosan and/or its derivative or salt, wherein the antimicrobial biopolymer has a weight-average molecular weight M_{w} in the range of from 1,500 Da to 9,499 Da and wherein the antimicrobial biopolymer has a degree of acetylation of at least 5%, based on the acetylatable functional groups of the biopolymer,
wherein the antimicrobial biopolymer is applied and/or coated onto the textile fabric,
wherein the textile fabric contains the antimicrobial biopolymer in an amount in the range of from 0.001% to 20% by weight, based on the textile fabric, and/or wherein the textile fabric contains the antimicrobial biopolymer in an amount in the range of from 0.1 g/m² to 200 g/m², based on the textile fabric, and
wherein the textile fabric comprises and/or is equipped with at least one additive, wherein the additive is selected from the group consisting of mandelic acid, salicylic acid, ascorbic acid and lactic acid.

2. Respiratory mask according to claim 1,
wherein the textile fabric contains the antimicrobial biopolymer in an amount of at least 0.005% by weight, preferably at least 0.01% by weight, preferably at least 0.05% by weight, particularly preferably at least 0.1% by weight, based on the textile fabric.

3. Respiratory mask according to claim 1 or 2,
wherein the textile fabric contains the antimicrobial biopolymer in an amount of at most 15 % by weight, preferably at most 10 % by weight, preferably at most 5 % by weight, particularly preferably at most 3 % by weight, based on the textile fabric.

4. Respiratory mask according to any of the preceding claims,
wherein the textile fabric contains the antimicrobial biopolymer in an amount in the range of from 0.005% to 15% by weight, preferably in the range of from 0.01% to 10% by weight, preferably in the range of from 0.05% to 5% by weight, particularly preferably in the range of from 0.1% to 3% by weight, based on the textile fabric.

5. Respiratory mask according to any of the preceding claims,
wherein the textile fabric contains the antimicrobial biopolymer in an amount of at least 0.2 g/m², preferably at least 0.5 g/m², preferably at least 0.75 g/m², particularly preferably at least 1 g/m², relative to the textile fabric.

6. Respiratory mask according to any of the preceding claims,
wherein the textile fabric contains the antimicrobial biopolymer in an amount of at most 100 g/m², preferably at most 50 g/m², preferably at most 10 g/m², particularly preferably at most 5 g/m², relative to the textile fabric.

7. Respiratory mask according to any of the preceding claims,
wherein the textile fabric contains the antimicrobial biopolymer in an amount in the range of from 0.2 g/m² to 100 g/m², preferably in the range of from 0.5 g/m² to 50 g/m², preferably in the range of from 0.75 g/m² to 10 g/m², particularly preferably in the range of from 1 g/m² to 5 g/m², based on the textile fabric.

8. Method for providing and/or obtaining a textile fabric as a component of a respiratory protection mask, as defined in any one of claims 1 to 7, with at least one antimicrobial biopolymer selected from chitosan and/or its derivative or salt,
wherein the antimicrobial biopolymer has a weight average molecular weight M_{w} in the range of from 1,500 Da to 9,499 Da and wherein the antimicrobial biopolymer has a degree of acetylation of at least 5%, based on the acetylatable functional groups of the biopolymer,
wherein the antimicrobial biopolymer is applied and/or coated (on)to the textile fabric,
wherein the antimicrobial biopolymer is applied and/or coated (on)to the textile fabric in an amount in the range of from 0.001% to 20% by weight, based on the textile fabric, and/or wherein the antimicrobial biopolymer is applied and/or coated (on)to the textile fabric in an amount in the range of from 0.1 g/m² to 200 g/m², based on the textile fabric,
wherein the textile fabric is brought into contact with a composition,
wherein the composition contains the following ingredients:
(a) at least one antimicrobial biopolymer as defined above,
(b) at least one additive, wherein the additive is selected from the group consisting of mandelic acid, salicylic acid, ascorbic acid and lactic acid; and
(c) at least one carrier medium;
wherein the carrier medium of the composition is subsequently removed.

## Revendications

1. Masque de protection respiratoire sous la forme d'un demi-masque filtrant de préférence les particules et/ou les aérosols et/ou d'une protection bucco-nasale filtrant de préférence les particules et/ou les aérosols, de préférence pour empêcher la transmission d'agents pathogènes par infection par gouttelettes ou de préférence pour réduire la charge en germes et en virus,
où le masque de protection respiratoire présente au moins une structure textile plane perméable à l'air,
où le tissu plat est apprêté avec au moins un biopolymère antimicrobien choisi parmi le chitosane et/ou son dérivé ou son sel, où le biopolymère antimicrobien présente un poids moléculaire moyen en poids M_{w} dans la plage de 1.500 Da à 9.499 Daltons (Da) et où le biopolymère antimicrobien présente un degré d'acétylation d'au moins 5 % par rapport aux groupes fonctionnels acétylables du biopolymère,
où le biopolymère antimicrobien est appliqué et/ou enduit sur la structure textile plane,
où la structure textile plane contient le biopolymère antimicrobien en une quantité dans la plage de 0,001 % en poids à 20 % en poids, par rapport à la structure textile plane, et/ou où la structure textile plane contient le biopolymère antimicrobien en une quantité dans la plage de 0,1 g/m² à 200 g/m², par rapport à la structure textile plane, et
où la structure textile plane présente au moins un additif et/ou est apprêté avec celui-ci, l'additif étant choisi dans le groupe de l'acide mandélique, de l'acide salicylique, de l'acide ascorbique et de l'acide lactique.

2. Masque de protection respiratoire selon la revendication 1,
où la structure textile plane contient le biopolymère antimicrobien en une quantité d'au moins 0,005 % en poids, de préférence d'au moins 0,01 % en poids, de préférence d'au moins 0,05 % en poids, de manière particulièrement préférée d'au moins 0,1 % en poids, par rapport à la structure textile plane.

3. Masque de protection respiratoire selon la revendication 1 ou 2,
où la structure textile plane contient le biopolymère antimicrobien en une quantité de 15 % en poids au maximum, de préférence de 10 % en poids au maximum, de préférence de 5 % en poids au maximum, de manière particulièrement préférée de 3 % en poids au maximum, par rapport à la structure textile plane.

4. Masque de protection respiratoire selon l'une des revendications précédentes,
où la structure textile plane contient le biopolymère antimicrobien en une quantité dans la plage de 0,005 % en poids à 15 % en poids, de préférence dans la plage de 0,01 % en poids à 10 % en poids, de préférence dans la plage de 0,05 % en poids à 5 % en poids, de manière particulièrement préférée dans la plage de 0,1 % en poids à 3 % en poids, par rapport à la structure textile plane.

5. Masque de protection respiratoire selon l'une des revendications précédentes,
où la structure textile plane contient le biopolymère antimicrobien en une quantité d'au moins 0,2 g/m², de préférence d'au moins 0,5 g/m², de préférence d'au moins 0,75 g/m², de manière particulièrement préférée d'au moins 1 g/m², par rapport à la structure textile plane.

6. Masque de protection respiratoire selon l'une des revendications précédentes,
où la structure textile plane contient le biopolymère antimicrobien en une quantité d'au maximum 100 g/m², de préférence d'au maximum 50 g/m², de préférence d'au maximum 10 g/m², de manière particulièrement préférée d'au maximum 5 g/m², par rapport à la structure textile plane.

7. Masque de protection respiratoire selon l'une des revendications précédentes,
où la structure textile plane contient le biopolymère antimicrobien en une quantité de l'ordre de 0,2 g/m² à 100 g/m², de préférence de l'ordre de 0,5 g/m² à 50 g/m², de préférence de l'ordre de 0,75 g/m² à 10 g/m², de manière particulièrement préférée de l'ordre de 1 g/m² à 5 g/m², par rapport à la structure textile plane.

8. Procédé d'apprêtage et/ou d'obtention d'une structure textile plane constitutive d'un masque de protection respiratoire, tel que défini dans l'une des revendications 1 à 7, avec au moins un biopolymère antimicrobien choisi parmi le chitosane et/ou son dérivé ou son sel,
où le biopolymère antimicrobien a un poids moléculaire moyen en poids M_{w} dans la plage de 1.500 Da à 9.499 Da et où le biopolymère antimicrobien a un degré d'acétylation d'au moins 5 %, sur la base des groupes fonctionnels acétylables du biopolymère,
où le biopolymère antimicrobien est appliqué et/ou enduit sur la structure textile plane,
où le biopolymère antimicrobien est appliqué et/ou enduit sur la structure textile plane en une quantité de l'ordre de 0,001 % en poids à 20 % en poids, par rapport à la structure textile plane, et/ou où le biopolymère antimicrobien est appliqué et/ou enduit sur la structure textile plane en une quantité de l'ordre de 0,1 g/m² à 200 g/m², par rapport à la structure textile plane,
où la structure textile plane est mise en contact avec une composition,
la composition contenant les ingrédients suivants :
(a) au moins un biopolymère antimicrobien tel que défini précédemment,
(b) au moins un additif, où l'additif est choisi dans le groupe constitué par l'acide mandélique, l'acide salicylique, l'acide ascorbique et l'acide lactique; et
(c) au moins un milieu de support (milieu porteur);
le milieu de support de la composition étant ensuite éliminé.
